(19) **Europäisches Patentamt / European Patent Office / Office européen des brevets**

(11) **EP 4 170 277 A1**

(12) **EUROPEAN PATENT APPLICATION**
published in accordance with Art. 153(4) EPC

(43) Date of publication:
**26.04.2023  Bulletin 2023/17**

(21) Application number: **21891701.1**

(22) Date of filing: **01.11.2021**

(51) International Patent Classification (IPC):
**F41H 13/00** (2006.01)     **G06T 7/136** (2017.01)
**F41H 11/02** (2006.01)     **G06T 5/50** (2006.01)

(52) Cooperative Patent Classification (CPC):
**F41H 11/02; F41H 13/00; G06T 5/50; G06T 7/136**

(86) International application number:
**PCT/JP2021/040246**

(87) International publication number:
**WO 2022/102454 (19.05.2022 Gazette 2022/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **13.11.2020   JP 2020189059**

(71) Applicant: **Mitsubishi Heavy Industries, Ltd.**
**Tokyo 100-8332 (JP)**

(72) Inventors:
• **MORIOKA, Tomoya**
  **Tokyo 100-8332 (JP)**
• **NISHIKATA, Shingo**
  **Tokyo 100-8332 (JP)**
• **HAMAMOTO, Koichi**
  **Tokyo 100-8332 (JP)**

(74) Representative: **Hoffmann Eitle**
**Patent- und Rechtsanwälte PartmbB**
**Arabellastraße 30**
**81925 München (DE)**

(54) **LASER IRRADIATION SYSTEM, IMAGE GENERATION DEVICE, AND STORAGE MEDIUM**

(57)    A laser radiation system is provided with a search radiation section that radiates search light to a target object, a laser radiation section that radiates a laser beam, an image acquisition section that acquires a first image in which the target object irradiated with the search light is imaged and a second image in which an imaging range including the target object is imaged, a generation section that generates, based on the first image and the second image, a generated image in which an influence by disturbance light is less than in the first image, and a radiation control section that controls, based on the generated image, a direction in which the laser radiation section radiates the laser beam. In addition, in the present laser radiation system, an intensity of the search light by which an image is formed in the second image is smaller than an intensity of the search light by which an image is formed in the first image.

F I G . 2

**Description**

TECHNICAL FIELD

The present invention relates to a laser radiation system, an image generation device, and a recording medium. More specifically, the present invention relates to a laser radiation system, an image generation device, and a recording medium that may acquire an image of a target object of which an influence by disturbance light is little.

BACKGROUND

For example, among systems such as a laser radiation system that destructs a target object by a laser beam and a machine tool that processes a target object, there are ones that acquire an image of the target object. In general, an image of a target object contains a noise caused by disturbance light. When an amount of noise increases, a performance of the system may degrade due to decrease of accuracy of laser radiation or machining accuracy for example.

In relation with the above, Patent Literature 1 discloses a shape measurement device that measures a shape by irradiating a target object with laser light. In this shape measurement device, a signal to noise ratio of an image is improved by arranging an optical bandpass filter between a lens and an image sensor.

Cited reference

[Patent Literature]

[Patent Literature 1] Japanese Patent Application Publication No. 2017-20876

SUMMARY

In a technology of Patent Literature 1, the higher the amount of disturbance light, the narrower the bandwidth of the optical band filter is required, in order to sufficiently reduce noise. On the other hand, in case of destructing a target object by radiating laser beam for example, the temperature of the target object may become high. In this case, the amount of disturbance light due to blackbody radiation increases. Alternatively, when there is another light source such as the sun, the disturbance light becomes strong also. As described above, in some system for acquiring an image of a target object, a large amount of noise due to disturbance light may be contained in an image in which the target object is imaged.

However, it is difficult or impossible to generate a band filter of which a bandwidth is narrower than or equal to a given threshold value. Therefore, there was a problem in prior art that a noise in an image of a target object cannot sufficiently reduced when an amount of disturbance light increases.

In order to deal with situations like above, an objective of the present invention is to provide a technology for acquiring an image of a target object with less influence from disturbance light.

In order to achieve the above objective, a laser radiation system according to an embodiment is provided with a search radiation section that radiates search light to a target object, a laser radiation section that radiates a laser beam, an image acquisition section that acquires a first image in which the target object is imaged and a second image in which an imaging range that includes the target object is imaged, a generating section that generates a generated image, based on the first image and the second image, in which an influence from disturbance light is less than in the first image, and a radiation control section that controls a direction, in which the laser radiation section radiates the laser beam, based on the generated image. Herein, an intensity of the search light that forms the second image is smaller than an intensity of the search light that forms the first image.

In order to achieve the above objective, an image generation device according to an embodiment is provided with a reception section that receives a first image in which a target object irradiated with search light is imaged and a second image in which an imaging range that includes the target object is imaged, a generating section that generates a generated image, based on the first image and the second image, in which an influence from disturbance light is less than in the first image, and an output section that outputs the generated image. Herein, an intensity of the search light that forms the second image is smaller than an intensity of the search light that forms the first image.

In order to achieve the above objective, a non-transitory recording medium according to an embodiment stores a program that makes a computer communicably connected to a laser radiation section that radiates a laser beam execute a process of: acquiring a first image in which a target object irradiated with search light is imaged and a second image in which an imaging range that includes the target object is imaged; generating a generated image, based on the first image and the second image, in which an influence by disturbance light is less than in the first image; and controlling a direction in which the laser radiation section radiates the laser beam, based on the generated image. Herein, an intensity of the search light that forms the second image is smaller than an intensity of the search light that forms the first image.

According to the above-described embodiments, a technology of acquiring an image of a target object with less influence from disturbance light can be provided.

BRIEF DESCRIPTION OF THE DRAWINGS

[FIG. 1] FIG. 1 is a block diagram of a laser radiation system related to a first embodiment.

[FIG. 2] FIG. 2 is a block diagram for describing a function of the laser radiation system.

[FIG. 3] FIG. 3 is a flowchart of a first control process that the laser radiation system executes.

[FIG. 4A] FIG. 4A is a diagram that shows a relationship between light that arrives from a target object to the laser radiation system and a pass band of a first bandpass filter in a spectrum component.

[FIG. 4B] FIG. 4B is a diagram that shows an example of a first image.

[FIG. 5A] FIG. 5A is a diagram that shows a relationship between light that arrives from the target object to the laser radiation system and a pass band of a second bandpass filter in a spectrum component.

[FIG. 5B] FIG. 5B is a diagram that shows an example of a second image.

[FIG. 6A] FIG. 6A is a diagram that shows an example of a spectrum component of light related to an image contained in a generated image that the laser radiation system generates.

[FIG. 6B] FIG. 6B is a diagram that shows an example of the generated image.

[FIG. 7] FIG. 7 is a block diagram for describing a function of a laser radiation system according to a second embodiment of the present invention.

[FIG. 8] FIG. 8 is a flowchart of a second control process that the laser radiation system executes.

[FIG. 9A] FIG. 9A is a diagram that shows a relationship between light that arrives from a target object to the laser radiation system and a pass band of a first bandpass filter in a spectrum component.

[FIG. 9B] FIG. 9B is a diagram that shows an example of a third image.

[FIG. 10] FIG. 10 is a block diagram for describing a function of a laser radiation system related to a third embodiment of the present invention.

[FIG. 11] FIG. 11 is a flowchart of a third control process that the laser radiation system executes.

[FIG. 12A] FIG. 12A is a diagram that shows a spectrum component of light that arrives from the target object to the laser radiation system at a time of imaging the first image.

[FIG. 12B] FIG. 12B is a diagram that shows an example of the first image.

[FIG. 13A] FIG. 13A is a diagram that shows a spectrum component of light that arrives from the target object to the laser radiation system at a time of imaging the second image.

[FIG. 13B] FIG. 13B is a diagram that shows an example of the second image.

[FIG. 14A] FIG. 14A is a diagram that shows an example of a spectrum component of light related to an image contained in a generated image that the laser radiation system generates.

[FIG. 14B] FIG. 14B is a diagram that shows an example of the generated image.

[FIG. 15] FIG. 15 is a flowchart of a fourth control process that the laser radiation system executes.

[FIG. 16] FIG. 16 is a flowchart of a fifth control process that the laser radiation system executes.

DETAILED DESCRIPTION

In the following, embodiments of the present invention will be described with reference to diagrams. In order to facilitate understanding, common or corresponding components may be shown with same symbols and descriptions thereof may be omitted.

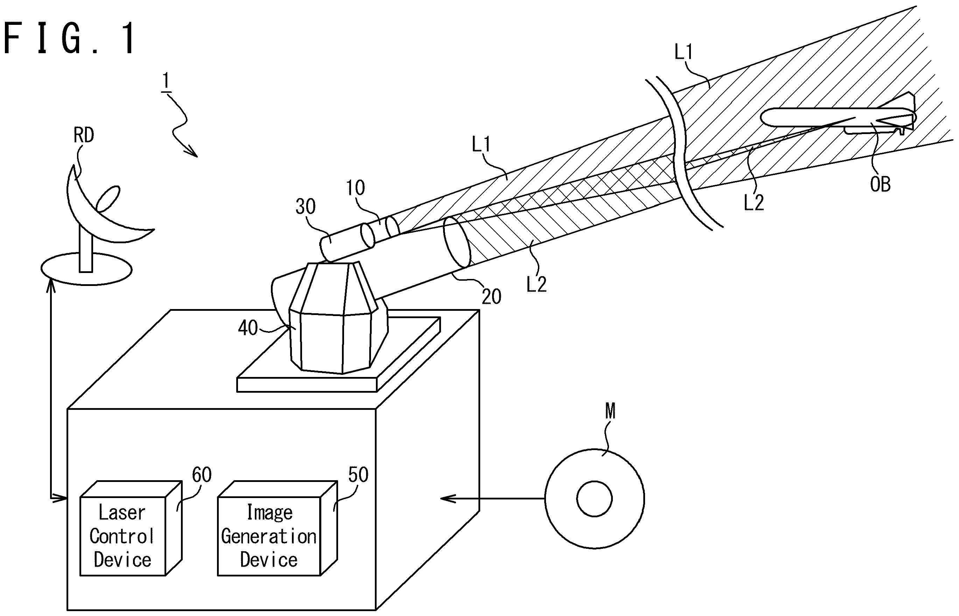

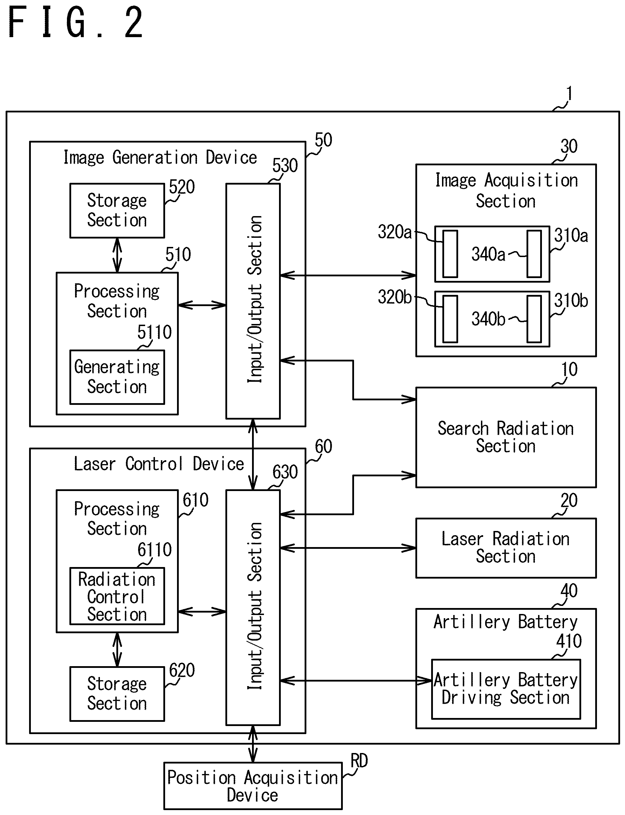

(First embodiment) As shown in FIG. 1 and FIG. 2, a laser radiation system 1 according to the present embodiment is provided with a search radiation section 10, a laser radiation section 20, an image acquisition section 30, an artillery battery 40, an image generation device 50, and a laser control device 60. The laser control device 60 is communicably connected to a position acquisition device RD. The position acquisition device RD includes a radar search device, acquires position information that represents a position or the like of a target object OB, and transmits the acquired position information to the laser control device 60.

The artillery battery 40 supports the search radiation section 10, the laser radiation section 20, and the image acquisition section 30 so that respective optical axes thereof extend approximatively in parallel toward a given position of the target object OB. The artillery battery 40 is provided to be able to change directions of optical axes of the search radiation section 10, the laser radiation section 20, and the image acquisition section 30. Specifically, the artillery battery 40 has an artillery battery driving section 410 that can change an azimuth direction of a vector of a projection of an optical axis in a horizontal plane (an angle between the projected vector of the optical axis and a meridian line) and an angle between the optical axis and a vector that extends in a vertical direction (a direction perpendicular to the horizontal plane), respectively to directions represented by a control command from the laser control device 60. It should be noted that the optical axes directions of the search radiation section 10, the laser radiation section 20, and the image acquisition section 30 will be collectively referred to as an optical axis direction of the artillery battery 40.

The search radiation section 10 is configured to radiate search light (search light L1 in FIG. 1). As a physical configuration, for example, the search radiation section 10 includes a pulse laser generation device that can generate pulse laser as the search light L1, a lens that can radiate the pulse laser toward the target object OB, and an input/output device that is communicably connected to the image generation device 50 and the laser control device 60. The search radiation section 10 radiates the search light L1 toward the target object OB based on the control command from the laser control device 60. In the example of FIG. 1, a beam width of the search light L1 widens as the search light L1 progresses in a radiation direction in order to grasp an overall shape of the target object OB. However, the search light L1 is not limited to this example and may be parallel beam light having a beam width that is almost uniform regardless of radiation distance. In this case, the beam width is for example several meters or more (2 m to 5 m for example).

The search light L1 is radiated to the target object OB. The radiated search light L1 is used so that the laser radiation system 1 receives reflected light from the target object OB to acquire an exact position of the target object OB. The search light L1 has an emission spectrum curve with a peak of energy density at a wavelength λ1. In the emission spectrum curve of the search light L1, a first band WB1 of the wavelength of the search light L1 is defined. For example, the first band WB 1 may be defined as a wavelength range (hereinafter referred to as a wavelength range of the search light L1) of which an energy density of the search light L1 is more than or equal to a predetermined ratio (for example, 50%) of the peak thereof. In this case, the width of the first band WB1 is the laser linewidth of the search light L1.

In the present embodiment, the target OB is an object to be destroyed by high-power laser light (laser beam L2 in FIG. 1) that the laser radiation section 20 of the laser radiation system 1 radiates. For example, the target object OB is a flying body such as a hostile drone, helicopter, aircraft, or the like. It should be noted that the target object OB may be an object that moves on land, such as a vehicle or the like. Alternatively, the target object OB may be an object that moves in outer space, such as space debris or the like.

The target object OB reflects the search light L1 that is radiated toward itself, diffusely or specularly. The reflected light of the search light L1 reflected by the target object OB has an emission spectrum curve that almost matches the search light L1. Furthermore, a surface temperature of the target object OB raises when the laser beam L2 is radiated from the laser radiation section 20 and the target object OB emits blackbody radiation due to heat generation. This blackbody radiation contains light in a wide wavelength range including the first band WB1 of the search light L1.

The image acquisition section 30 is provided with one or more imaging sections that can acquire images of the target object OB. In the present embodiment, the image acquisition section 30 is provided with a first imaging section 310a and a second imaging section 3 10b. The image acquisition section 30 outputs data of images that the first imaging section 310a and the second imaging section 310b imaged to the image generation device 50.

The first imaging section 310a receives light having a wavelength in a second band WB2 and generates data of image represented by the received light. The first imaging section 310a is provided with a first imaging sensor 320a and a first bandpass filter 340a. The first imaging sensor 320a images the received light to generate data of the image that has been imaged. As described later, the first bandpass filter 340a is an optical bandpass filter of which the pass band is the second band WB2. The first imaging section 310a receives the light that has passed through the first bandpass filter 340a on the first imaging sensor 320a to generate the data of the image. It should be noted that the first imaging sensor 320a includes a lens and generates the data of the image that is focused at a distance represented by the control command from the image generation device 50 and the laser control device 60.

In the present embodiment, the second band WB2 of the first bandpass filter 340a includes the first band WB1, that is the wavelength range of the search light L1, in the range thereof. Therefore, the first imaging section 310a images the light that contains the search light L1 (and the reflected light thereof).

It should be noted that, ideally, the first bandpass filter 340a completely passes light having a wavelength in the second band WB2 that is the set pass band, and does not pass any light having other wavelength at all. In fact, the first bandpass filter 340a passes light having a wavelength in the second band WB2 with a gain higher than a predetermined value (-3 dB and more for example). On the other hand, a gain with which light having a wavelength outside the second band WB2 passes through the first bandpass filter 340a becomes less than or equal to a predetermined value (-3 dB for example). Hereinafter, similar pass bands will be defined for other bandpass filters.

As described above, the first imaging section 310a acquires an image formed by reflected light that originates from a reflection of the search light L1 on the target object OB. For example, the first imaging section 310a acquires a first image I1 including an image of the target object OB in relation with the search light L1. For example, a brightness value of each pixel included in the first image I1 represents an intensity of light that the first imaging sensor 320a of the first imaging section 310a received at a position corresponding to a position of each pixel. For example, the brightness value corresponds to an amount of energy calculated by multiplying the intensity of the light arrived at the first imaging sensor 320a by an area of one pixel of the first imaging sensor 320a and a length of time a shutter was opened.

The second imaging section 310b receives light having a wavelength in a third band WB3 and generates data of an image represented by the received light. The second imaging section 310b is provided with a second imaging sensor 320b and a second bandpass filter 340b. The second imaging sensor 320b images the received light and generates data of the image that is imaged. The second bandpass filter 340b is an optical bandpass filter of which pass band is the third band WB3 of wavelength. The second imaging section 310b includes a lens, similarly to the first imaging section 3 10a, and generates data of an image focused at a distance represented by the control command from the image generation device 50 and the laser control device 60.

In the present embodiment, the second bandpass filter 340b has the third band WB3, that does not include the first band WB1 which is the wavelength range of the search light L 1 in the range thereof, as the pass band. Therefore, ideally, the search light L1 and/or the reflected light thereof do not pass through the second bandpass filter 340b. Therefore, an intensity of the search light L1 that forms a second image I2 that the second imaging section 3 10b images is smaller than the intensity of the search light L 1 that forms the first image I1; in other words, a degree of including an image of the target object OB related to the search light L1 by the second image I2 is less than the first image I1. On the other hand, the second image I2 contains a noise N2 based on an influence of other light (such as disturbance light including blackbody radiation) that arrives from the target object OB. The second imaging section 3 10b that includes the second bandpass filter 340b is configured to obtain the second image I2 including the noise N2 that is same as or approximate to the noise N1.

It should be noted that physical properties of the search light L1, the first bandpass filter 340a, and the second bandpass filter 340b can be arbitrarily selected depending on a laser light source, an optical filter, or the like that are available.

The laser radiation section 20 is provided to be able to radiate the laser beam L2. In the present embodiment, the laser beam L2 is a high-power laser beam of which intensity is higher than the search light L1. The laser radiation section 20 focuses the laser beam L2 at a distance that the laser control device 60 specifies. In addition, the artillery battery 40 directs the radiation direction in which the laser radiation section 20 radiates the laser beam L2 in a direction toward a predetermined position of the target object OB. Therefore, the laser radiation section 20 radiates the laser beam L2 to focus at a predetermined position of the target object OB based on a drive control by the laser control device 60.

The image generation device 50 generates an image that includes an image of the target object OB formed by the reflected light of the search light L1 reflected by the target object OB and that is less affected by disturbance light, based on the image data from the image acquisition section 30. The image generation device 50 is provided with a processing section 510, a storage section 520, and an input/output section 530.

The input/output section 530 is electrically connected to the search radiation section 10, the image acquisition section 30, and the laser control device 60. The input/output section 530 mediates information transmission between each connected component. For example, the input/output section 530 functions as a reception section that receives the data of the first image I1 and the data of the second image I2 that the image acquisition section 30 outputs. In addition, the input/output section 530 receives information that the search radiation section 10 radiated the search light L1 from the search radiation section 10. In addition, the input/output section 530 functions as an output section that outputs the generated image Ig that the image generation device 50 generated to the laser control device 60. Furthermore, the input/output section 530 transmits information received from devices outside the image generation device 50 (the search radiation section10, the image acquisition section 30, the laser control device 60 for example) to the processing section 510. Furthermore, the input/output section 530 transmits control commands received from the processing section 510 to those external devices.

The storage section 520 may include a temporary recording medium such as a random-access memory (RAM). The storage section 520 provides a memory area for the processing section 510 to execute a process described later with such a configuration. In addition, the storage section 520 includes a non-transitory recording medium such as a read only memory (ROM), a hard disk drive, and a flash memory. The storage section 520 non-transitorily stores setting data, programs, and the like for executing processes described later with such a configuration.

The processing section 510 may include a processing circuit that can perform digital information process such as a central processing unit (CPU), a digital signal processor, and an integral circuit (IC), for example. The processing section 510 cooperates with the storage section 520 to realize a generation section 5110 that generates the generated image Ig of which a noise due to disturbance light is less than the first image I1, based on the first image I1 and the second image I2 that the input/output section 530 received. The generation section 5110 executes a process described later to control the image acquisition section 30. For example, the generation section 5110 generates a control command that controls a focus distance of the image acquisition section 30 and a control command that instructs imaging. The control command that controls the focus distance includes for example information of a distance from the image acquisition section 30 to the target object OB. The control command that instructs imaging includes for example information that represents a timing of imaging, information that represents an amount of aperture, and the like. Then, the generated control command is outputted to the image acquisition section 30 by use of the input/output section 530, and the generation section 5110 makes the image acquisition section 30 perform imaging of the image of the target object OB. In addition, in the present embodiment, the generation section 5110 of the processing section 510 generates the generated image Ig by subtracting brightness values of at least a part of pixels included in the first image I1 by brightness values of respectively corresponding pixels of the second image I2. The process of generating the generated image Ig executed by the generation section 5110 will be described later.

The laser control device 60 is provided with a processing section 610, an input/output section 630, and a storage section 620.

The input/output section 630 is electrically connected to the search radiation section 10, the image generation device 50, and the position acquisition device RD. The input/output section 630 mediates information transmission between each connected component. For example, the input/output section 630 functions as a reception section that receives data of the generated image Ig that the image generation device 50 outputs. In addition, the input/output section 630 receives information that the search radiation section 10 radiated the search light L1 from the search radiation section 10. The input/output section 630 functions as a position information reception section that receives position information of the target object OB (including for example a current position of the target object OB as seen from the laser radiation system 1, a relative moving direction and a relative moving speed as seen from the laser radiation system 1, or the like) that the position acquisition device RD acquired. The input/output section 630 transmits information received from a device outside the laser control device 60 (for example the search radiation section 10, the image generation device 50, or the like) to the processing section 610. Furthermore, the input/output section 630 transmits information received from the processing section 610 to the external device.

The storage section 620 includes a temporary recording medium such as a RAM. The storage section 620 provides a memory area for the processing section 610 to execute a process described later with such a configuration. In addition, the storage section 620 includes a non-transitory recording medium such as a ROM, a hard disk drive, and a flash memory. The storage section 620 non-transitorily stores setting data, programs, and the like for executing processes described later with such a configuration.

In addition, the laser radiation system 1 may read out a program stored in a recording medium M shown in FIG. 1 and store the read program in order to execute a process described later. The recording medium M may be a computer readable recording medium such as a compact disc read only memory (CD-ROM), a digital versatile disc read only memory (DVD-ROM), a universal serial bus (USB) memory, a storage device of an external server connected via internet, for example. In this case, the input/output section 530 and/or the input/output section 630 read the program that is stored in the recording medium M. Then, the storage section 520 and/or the storage section 620 store the read program.

The processing section 610 is a processing circuit that can perform digital information process, such as a CPU, a digital signal processor, or an IC, for example. The processing section 610 executes a process described later by cooperating with the storage section 620 to realize a radiation control section 6110. The radiation control section 6110 executes a process described later to generate a control command that controls the optical axis direction of the artillery battery 40 and a control command that controls the focus distance of the laser radiation section 20. The control command that controls the optical axis direction includes information of a direction to the target object OB as seen from the artillery battery 40, for example. The control command that controls the focus distance includes information of a distance from the artillery battery 40 to the target object OB, for example. Then, the input/output section 630 outputs the generated control command to the artillery battery driving section 410 of the artillery battery 40 and the laser radiation section 20. By doing so, the laser control device 60 controls the direction in which the laser radiation section 20 radiates the laser beam L2 and the focus distance of the laser beam L2.

The radiation control section 6110 of the processing section 610 determines the direction in which the laser radiation section 20 is to radiate the laser beam L2 (and the distance to focus the laser beam L2) based on the generated image Ig received by the input/output section 630 and the position information of the target object OB. Then, the radiation control section 6110 of the processing section 610 transmits the control command to the artillery battery 40 and directs the optical axes of the laser radiation section 20, the search radiation section 10, the first imaging section 310a, and the second imaging section 310b in the direction of the target object OB that the position information indicates. In addition, the radiation control section 6110 determines a part of the target object OB to irradiate with the laser beam L2 based on the generated image Ig and controls the radiation direction and the focus distance of the laser beam L2 to focus the laser beam L2 at this part.

The position acquisition device RD is provided with a three-dimensional radar with a scheme such as a passive phased array antenna scheme, an active phased array antenna scheme, or a cylindrical parabola antenna scheme, for example. The position acquisition device RD performs a detection of object (also known as enemy search) in a three-dimensional space with the laser radiation system 1 as a center, and determines whether the target object OB exists or not. When an existence of the target object OB is detected, the position acquisition device RD calculates the position information of the target object OB based on a detection result. The position information of the detected target object OB is transmitted to the input/output section 630 of the laser control device 60.

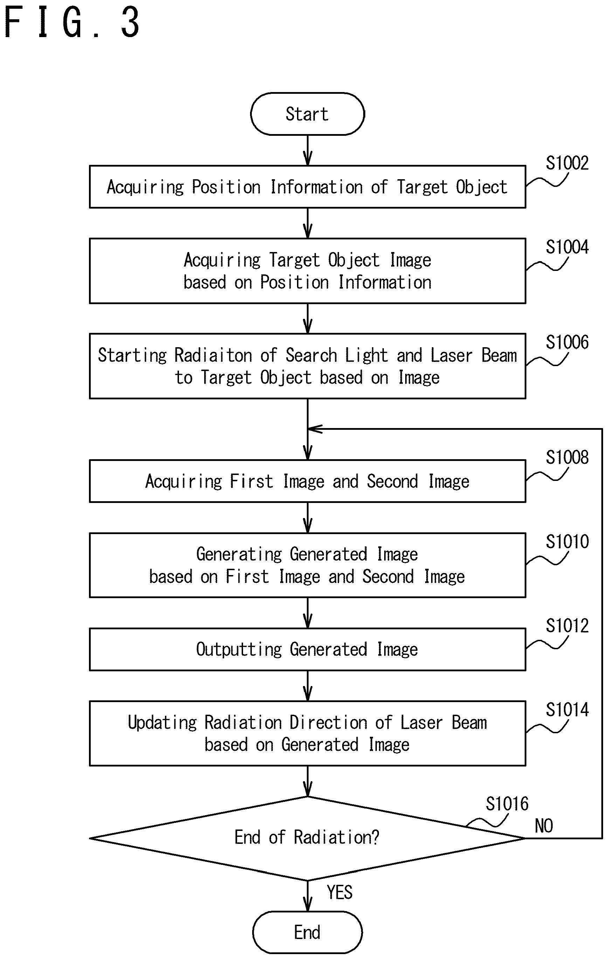

Next, an operation of the laser radiation system 1 will be described with reference to FIG. 3. When receiving information indicating a detection of the target object OB (the position information of the target object OB for example) from the position acquisition device RD, the laser radiation system 1 starts a first control process of FIG. 3.

In the first control process, at first, the radiation control section 6110 of the processing section 610 acquires information, from the position acquisition device RD (step S1002), that indicates the position of the target object OB including the direction and the distance from the laser radiation system 1 to the target object OB.

When the step S1002 ends, the radiation control section 6110 and the generation section 5110 of the processing section 510 acquires the image of the target object OB based on the acquired position information of the target object OB (step S1004). Specifically, the radiation control section 6110 outputs the controls command to the artillery battery driving section 410 to direct the optical axis direction of the artillery battery 40 in the direction of the target object OB that is acquired in the step S1004. This control command includes information of the direction from the artillery battery 40 to the target object OB for example. In addition, in the step S1004, the radiation control section 6110 may control the optical axis direction of the artillery battery 40 based on the direction, the distance, the moving direction, and the moving speed of the target object OB that are included in the acquired position information. Specifically, the radiation control section 6110 outputs the control command to the artillery battery 40 so that the optical axis of the artillery battery 40 is directed in the current direction of the target object OB. Alternatively, or additionally, the radiation control section 6110 may output the control command to the artillery battery driving section 410 so that the artillery battery 40 moves in a direction in which the optical axis of the artillery battery 40 continuously tracks the target object OB.

In addition, the radiation control section 6110 transfers the acquired position information of the target object OB to the processing section 510. The generation section 5110 of the processing section 510 of the image generation device 50 sets the focus of the imaging section of the image acquisition section 30 (for example, the first imaging section 310a) on the distance that the position information indicates based on the position information received from the laser control device 60. Then, the generation section 5110 makes the image acquisition section 30 perform the imaging of the target object OB and acquires the image data that is imaged. The imaging section that performs the imaging of the target object OB may perform the imaging of the target object OB by using any of the first imaging section 310a, the second imaging section 310b, or both, as long as the image acquisition section 30 can perform the imaging of the target object OB.

When the step S1004 ends, the generation section 5110 and the radiation control section 6110 then start radiation of the search light L1 and the laser beam L2 to the target object OB based on the image of the target object OB that is acquired in the step S1004 (step S1006). For example, at first, the generation section 5110 outputs the acquired image of the target object OB to the laser control device 60. Then, the radiation control section 6110 of the processing section 610 of the laser control device 60 specifies an irradiation region in the image to irradiate with the laser beam L2 based on a shape and characteristic information of the target object OB stored in the storage section 620. Herein, the shape and the characteristic information of the target object OB stored in the storage section 620 may be information in which information that indicates a shape and characteristics for identifying the target object OB as the concerned type of object by image recognition and information that indicates a portion of the target object OB to irradiate with the laser beam L2 (a vulnerable part for example) are associated for each type of target object OB (for example a drone or other category), for example. Then, the radiation control section 6110 specifies the irradiation portion of the target object OB to irradiate with the laser beam L2 based on the irradiation region in the image. Then, the radiation control section 6110 outputs the control command including the direction indicated by the acquired information to the artillery battery driving section 410 to control the artillery battery 40 so as to make the optical axis of the laser radiation section 20 directed to the target object OB. Furthermore, the radiation control section 6110 controls the focus distance of the laser radiation section 20 so that the laser beam L2 focuses at the position of the target object OB. After that, the radiation control section 6110 controls the search radiation section 10 and the laser radiation section 20 to start radiations of the search light L1 and the laser beam L2. It should be noted that in the step S1006 the radiation control section 6110 may start radiations of the search light L1 and the laser beam L2 to the target object OB further based on the position information acquired in the step S1002.

Next, the generation section 5110 acquires the first image I1 and the second image I2 of the target object OB by use of the image acquisition section 30 (step S1008).

Specifically, the generation section 5110 makes the first imaging section 310a and the second imaging section 310b perform imaging of the target object OB with the focus set in the direction and at the distance indicated by the position information acquired in the step S1002, for example. As a result, the first imaging section 310a acquires the first image I1 in which the target object OB is imaged. On the other hand, the second imaging section 310b acquires the second image I2 including the target object OB in the imaging range. Then, the input/output section 530 receives data of the first image I1 and the second image I2 that are imaged.

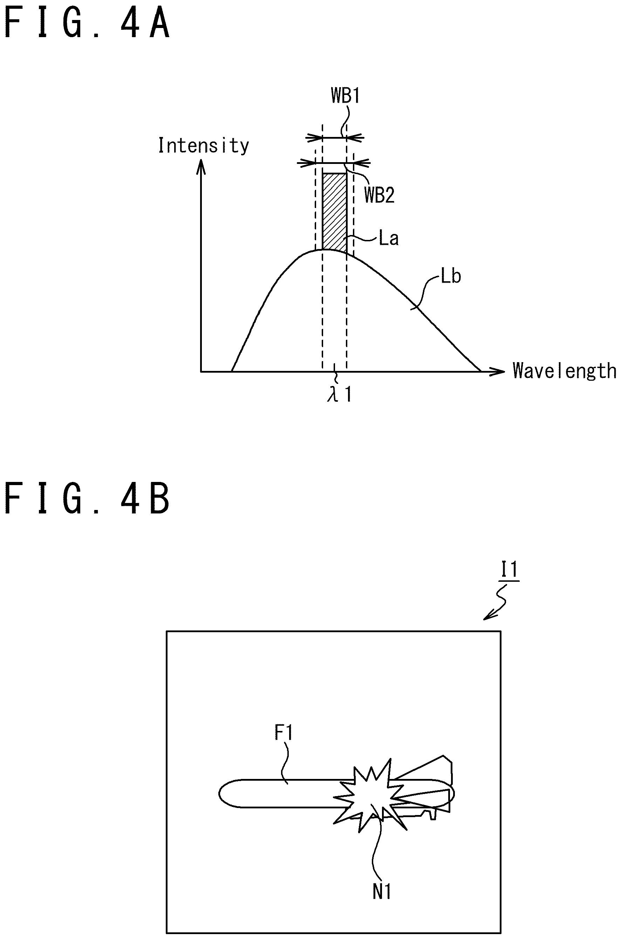

The first image I1 and the second image I2 are imaged by reception of arriving light that arrives from the target object OB to the laser radiation system 1. This arriving light contains light La caused by reflected light of the search light L1 and light Lb caused by a blackbody radiation of the target object OB, as shown in FIG. 4A for example. It should be noted that, in the graph in FIG. 4A, the horizontal axis represents a wavelength of light and the vertical axis represents an intensity of light. The light La has an energy density that is higher in the wavelength range of the search light L1 than other bands. On the other hand, the light Lb of the blackbody radiation has a relatively high intensity in a wavelength range that includes the first band WB1 and that is wider than the first band WB1, compared to the light La. It should be noted that the wavelength λ1 in FIG. 4A represents the wavelength included in the first band WB1 where the energy density of the search light L1 reaches a peak.

As shown in FIG. 4A, the first bandpass filter 340a according to the present embodiment has the second band WB2, that includes the first band WB1 and is wider than the first band WB1, as the pass band. In addition, as the second band WB2 includes the wavelengths of the light La and the light Lb, the first imaging section 310a performs imaging of the first image I1 that corresponds to light including a component of the reflected light that is the search light L1 reflected by the target object OB and a component of the disturbance light (especially blackbody radiation light). Therefore, as shown in FIG. 4B, the first image I1 includes an image F1 of the target object OB formed by the reflected light that is the search light L1 reflected by the target object OB and a noise N1 generated by an influence of the disturbance light.

When a surface of the target object OB is heated by the laser beam L2, an amount of the blackbody radiation increases. In particular, the increase of amount of blackbody radiation is significant at the part directly irradiated with the laser beam L2. Therefore, in the region of the first image I1 corresponding to the irradiated part (irradiated region), the brightness value becomes higher than an original value in the image F1 of the target object OB by the intensity of the noise N1 corresponding to the blackbody radiation.

When a strong noise N1 is generated by the blackbody radiation, the shape of the image F1 of the target object OB in the first image I1 may become difficult to be identified by the laser radiation system 1. Therefore, in the present embodiment, the second imaging section 310b acquires the second image I2 in order to generate the generated image Ig of which the noise N1 is less than in the first image I1. In the description of the present invention, the shape of the target object OB included in the images (the first image I1, the second image I2, the generated image Ig, and the like) will be referred to as the images of the target object OB. Among the images of the target object OB, the shape of the target object OB formed by forming an image of the reflected light that originates from a reflection of the search light L1 on the target object OB in an imaging section (the first imaging section 310a, the second imaging section 3 10b, or the like) will be referred to as the image of the target object OB with respect to the search light L1.

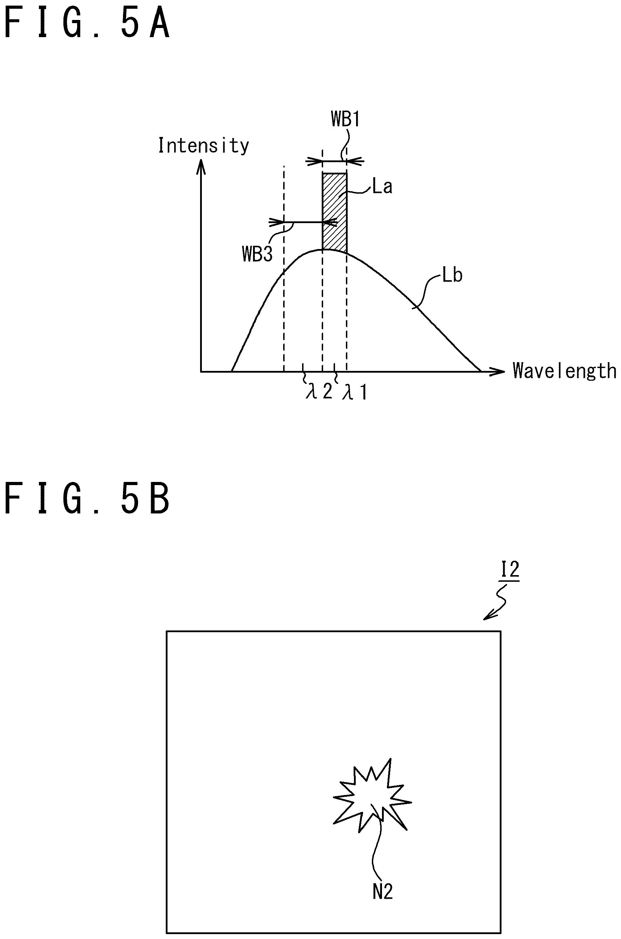

In order to isolate the noise N1 from the image F1 of the target object OB, an ideal second image I2 contains the noise N2 of which the shape and the brightness value are the same as the noise N1 of the first image I1 while does not contain the image of the target object OB with respect to the search light L1. In addition, ideally, both the second image I2 and the first image I1 are images in which a same imaging range that includes the target object OB is imaged. In order to perform imaging of the second image I2 as ideal as possible, the second imaging section 310b directs the optical axis in the same direction as the first imaging section 310a and performs imaging at the same time as the first imaging section 310a. In addition, as shown in FIG. 5A, the second bandpass filter 340b of the second imaging section 310b has the third band WB3, that satisfies the condition of not including the first band WB1 and is as close as possible to the first band WB1, as the pass band. For example, when it can be assumed that spectral distribution of the disturbance light such as the blackbody radiance, the sun light, or the like does not fluctuate significantly in a close wavelength range, the noise N2 included in the second image I2 is approximated to the noise N1 included in the first image I1 by setting the pass band of the second bandpass filter 340b to the third band WB3 close to the first band WB1.

As described above, the second image I2 corresponding to the light that has passed through the second bandpass filter 340b contains the noise N2 having a shape and an intensity of brightness that are almost same as the first image I1, as shown in FIG. 5B. On the other hand, the intensity of the search light L1 that forms the second image I2 is smaller than the intensity of the search light L1 that forms the first image I1.

When the first image I1 and the second image I2 as described above are acquired in the step S1008 in FIG. 3, then the generation section 5110 of the processing section 510 generates the generated image Ig based on the first image I1 and the second image I2 (step S1010). Specifically, the generation section 5110 generates the generated image Ig of which the noise is less than in the first image I1, by subtracting the brightness value of the respectively corresponding pixel of the second image I2 from the brightness value of each pixel in a subtraction area that occupies at least a part of the first image I1. In the present embodiment, the entire first image I1 will be set as the subtraction area.

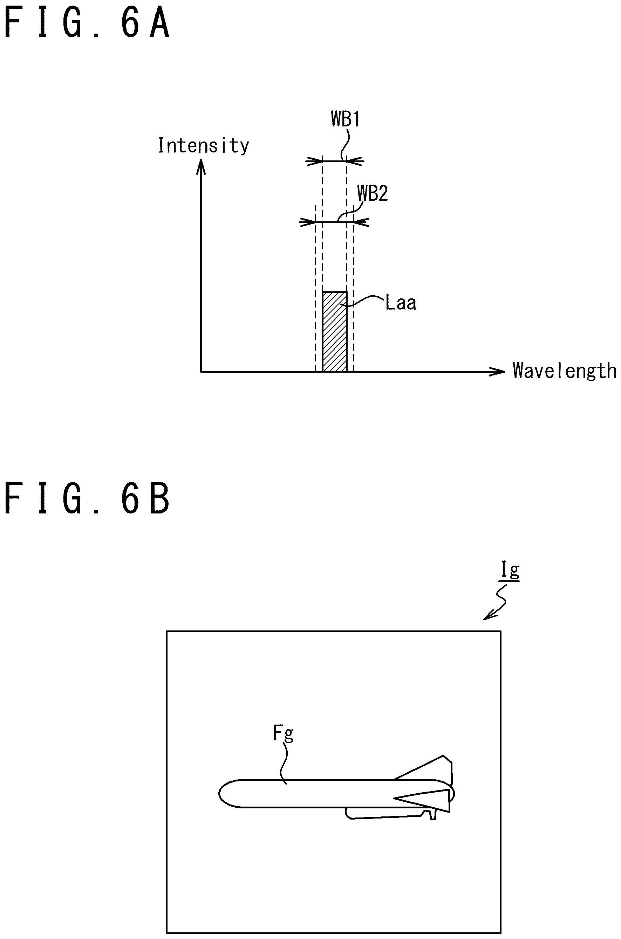

The process in the step S1010 is equivalent to a process of subtracting an intensity of the light Lb in the third band WB3 in FIG. 5A from a combined intensity of the light La and the light Lb in the second band WB2 in FIG. 4A. In the present embodiment, for wavelengths, the second band WB2 includes the first band WB1 and the third band WB3 is adjacent to the first band WB1. Herein, bands being adjacent means that overlapping part of the bands to each other and a gap between the bands are less than a predetermined value (for example a manufacturing error of filters) on a wavelength axis. Therefore, the intensity of the light Lb of the noise N1 in the second band WB2 is approximated to the intensity of the light Lb of the noise N1 in the third band WB3. Thus, for each pixel, when the brightness value of the second image I2 with respect to the third band WB3 is subtracted from the brightness value of the first image I1 with respect to the second band WB2, the generated image Ig corresponding to the intensity of the light Laa approximated to the light La in the second band WB2 is obtained, as shown in FIG. 6A. As the light La corresponds to the intensity of the reflected light of the search light L1, the generated image Ig represents an image Fg of the target object OB in which the noise N1 due to influence of the disturbance light is reduced, as shown in FIG. 6B.

It should be noted that, due to a difference between physical positions of the first imaging section 310a and the second imaging section 310b, there may occur a gap between the imaging range of the first imaging section 310a and the imaging range of the second imaging section 310b. In other words, the pixels in the first image I1 and the pixels in the second image I2 may have a misalignment in a relationship between the pixels. In order to correct this misalignment, in the step S1010, the generation section 5110 may correct the relationship between the pixels of the first image I1 and the second image I2. For example, when manufacturing the laser radiation system 1, a same subject is imaged by use of the first imaging section 310a and the second imaging section 310b and a table indicating which pixel of the first image I1 and which pixel of the second image I2 correspond to each other is generated based on a distance to the subject. Then, the generation section 5110 stores this correspondence table in the storage section 520 non-transitorily. The generation section 5110 can determine a pixel of the second image I2 corresponding to each pixel in the subtraction area of the first image I1 by use of this correspondence table. It should be noted that a known technology for overlapping a plurality of images such as concentration gradient method or plane estimation method may be used.

When the generated image Ig is generated in the step S1010, then the generation section 5110 of the processing section 510 of the image generation device 50 outputs the generated image Ig to the laser control device 60 (step S1012). For example, the generation section 5110 transmits the generated image Ig to the laser control device 60 via the input/output section 530.

Next, the radiation control section 6110 of the processing section 610 updates the radiation direction of the laser beam L2 based on the generated image Ig that the image generation device 50 transmitted (step S1014). For example, at first, the radiation control section 6110 determines information for adjusting the radiation direction of the laser beam L2 based on the generated image Ig that is newly acquired. As an example, the radiation control section 6110 extracts a region of the target object OB that corresponds to the radiation region to irradiate with the laser beam L2 from the image Fg. Then, the radiation control section 6110 calculates the irradiation part to irradiate with the laser beam L2 based on the extracted region. Then, the radiation control section 6110 controls the radiation direction and the focus distance of the laser beam L2 so that the laser beam L2 is radiated at the calculated irradiation part.

Next, the radiation control section 6110 determines whether to end the radiation or not (step S1016).

Specifically, the radiation control section 6110 determines whether a predetermined condition to end the radiation is satisfied or not. For example, the radiation control section 6110 determines that the condition to end the radiation is satisfied when a user (or a manager) inputted a command that instructs an end of radiation. Alternatively, the radiation control section 6110 may determine that the condition to end the radiation is satisfied when a destruction of the target object OB has been confirmed in the generated image Ig. Furthermore, the radiation control section 6110 may determine that the condition to end the radiation is satisfied when the target object OB cannot be identified in the generated image Ig.

When the radiation control section 6110 determines that the condition to end the radiation is not satisfied (step S1016: NO), the process is repeated from the step S1008. On the other hand, when the condition to end the radiation is determined to be satisfied (step S1016: YES), the radiation control section 6110 ends the first control process.

As described above, the laser radiation system 1 according to the present embodiment can acquire the generated image Ig of which the influence of the disturbance light is reduced in the image F3 of the target object OB that has reflected the search light even in an environment where the temperature of the target object OB is increased and there is a lot of disturbance light due to blackbody radiation.

It should be noted that although in the first embodiment an example of performing the imaging of the first image I1 by the first imaging section 310a and the second image I2 by the second imaging section 310b, respectively, was described, this is not limitative and any arbitrary configuration for performing the imaging of the first image I1 and the second image I2 may be selected. For example, the laser radiation system 1 may perform the imaging of the first image I1 and the second image I2 by use of an imaging section having a beam splitter. This imaging section has a beam splitter that splits the arriving light to guide to different optical paths and imaging sensors respectively arranged at the ends of two optical paths. This imaging section has the first bandpass filter 340a arranged in an optical path from the beam splitter to one of the imaging sensors. This imaging section is further provided with the second bandpass filter 340b arranged in an optical path from the beam splitter to another imaging sensor. The laser radiation system 1 in this variation example can receive light corresponding to the first image I1 and light corresponding to the second light I2 through a same optical axis to perform imaging of the first image I1 and the second image I2. Therefore, in this variation example, a degree of misalignment of pixel correspondence relationship between the pixels of the first image I1 and the pixels of the second image I2 is smaller than in the configuration of the first embodiment. In addition, pixel correspondence relationship is uniform regardless the distance from the target object OB. Therefore, the laser radiation system 1 according to this variation example can correct correspondence relationship between the first image I1 and the second image I2 with high accuracy and high speed.

(Second embodiment) The laser radiation system 2 according to the present embodiment is different from the laser radiation system 1 according to the first embodiment in that a third image I3 is acquired in addition to the first image I1 and the second image I2 and that the generated image is generated based on the first to third images.

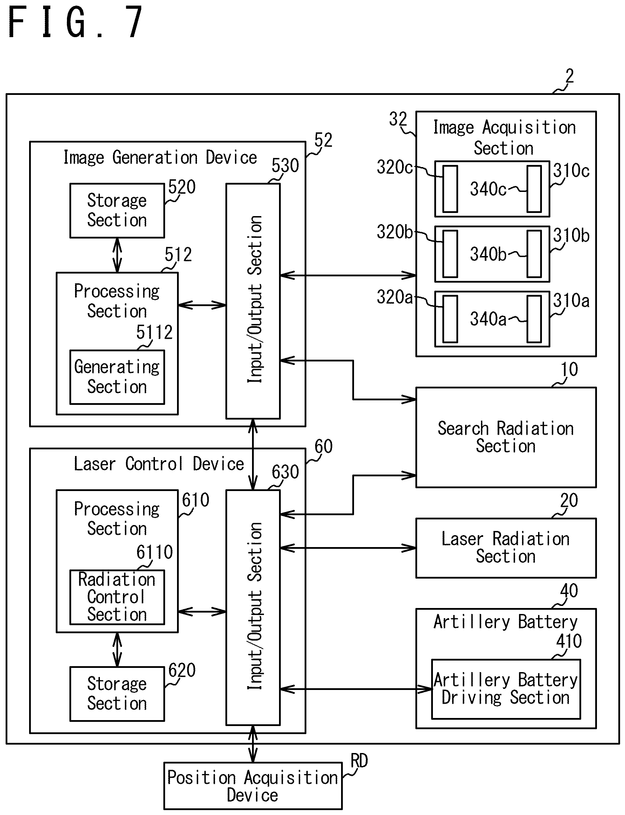

As shown in FIG. 7, the laser radiation system 2 according to the present embodiment has the image acquisition section 32 that is provided with a third imaging section 310c in addition to the first imaging section 310a and the second imaging section 310b. In addition, the image generation device 52 of the laser radiation system 2 is provided with a processing section 512 instead of the processing section 510. The processing section 512 realizes the generation section 5112 by cooperating with the storage section 520 and executing a process described later. The generation section 5112 executes a process described later to control the image acquisition section 32. For example, the generation section 5112 generates a control command and a control command for instructing to perform imaging. A control command for controlling the focus distance includes information of a distance from the image acquisition section 32 to the target object OB for example. The control command for instructing to perform imaging includes for example information indicating a timing to perform imaging, information indicating an amount of aperture, and the like. Then, by outputting the generated control command to the image acquisition section 32 by use of the input/output section 530, the generation section 5112 makes the image acquisition section 32 perform imaging of an image of the target object OB. The generation section 5112 generates the generation image Ig based on the third image I3 in addition to the first image I1 and the second image I2. Other configurations are similar to the laser radiation system 1 of the first embodiment.

The third imaging section 310c of the image acquisition section 32 receives light having a wavelength in a fourth band WB4 and generates data of an image represented by the received light. The third imaging section 310c is provided with a third imaging sensor 320c and a third bandpass filter 340c. The third imaging sensor 320c images the received light and generates the data of the image that has been imaged. As described later, the third bandpass filter 340c is an optical bandpass filter of which the pass band is the fourth band WB4. The third imaging section 310c receives the light that has passed through the third bandpass filter 340c on the third imaging sensor 320c to generate the data of the image. It should be noted that the third imaging sensor 320c includes a lens and generates the data of the image that is focused at a distance represented by the control command from the image generation device 50 and the laser control device 60.

In order to isolate the noise N1 from the image F1 of the target object OB, an ideal third image I3 contains the noise N3 of which the shape and the brightness value are the same as the noise N1 of the first image I1 while does not contain the image of the target object OB with respect to the search light L1. In addition, ideally, both the third image I3 and the first image I1 are images in which a same imaging range that includes the target object OB is imaged. In order to perform imaging of the third image I3 as ideal as possible, the third imaging section 310c directs the optical axis in substantially the same direction as the first imaging section 310a and performs imaging at substantially the same time as the first imaging section 310a.

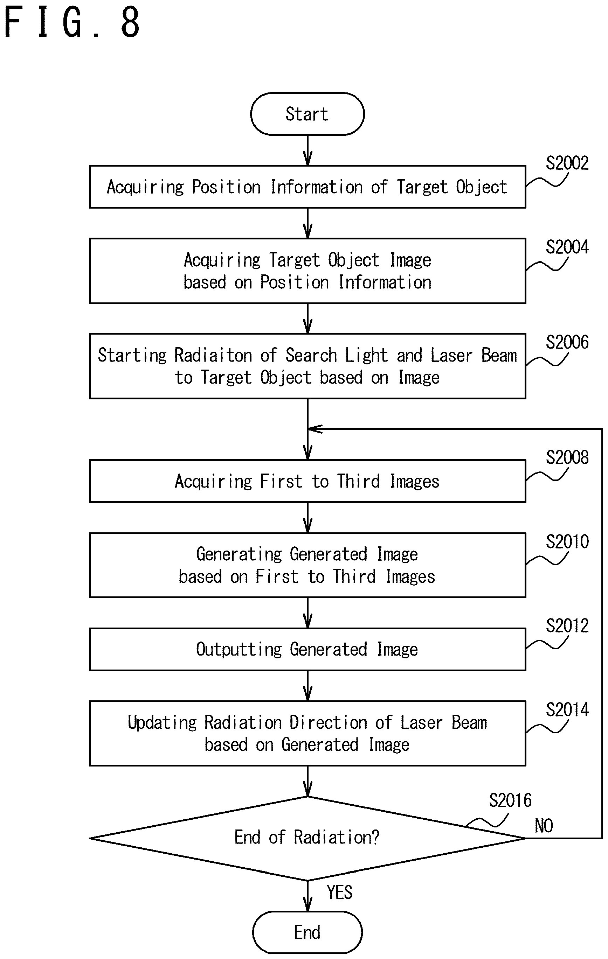

An operation of the laser radiation system 2 will be described with reference to FIG. 8. When receiving information indicating a detection of the target object OB from the position acquisition device RD, the laser radiation system 2 starts the second control process of FIG. 8

In the second control process, similarly to the step S1002 of FIG. 3, the radiation control section 6110 acquires position information of the target object OB from the position acquisition device RD (step S2002). Next, similarly to the step S1004 of FIG. 3, the generation section 5112 of the processing section 512 and the radiation control section 6110 acquire the image of the target object OB based on the acquired position information (step S2004). Then, similarly to the step S1006 of FIG. 3, the radiation control section 6110 starts radiation of the search light L 1 and the laser beam L2 to the target object OB based on the image acquired in the step S2004 (step S2006).

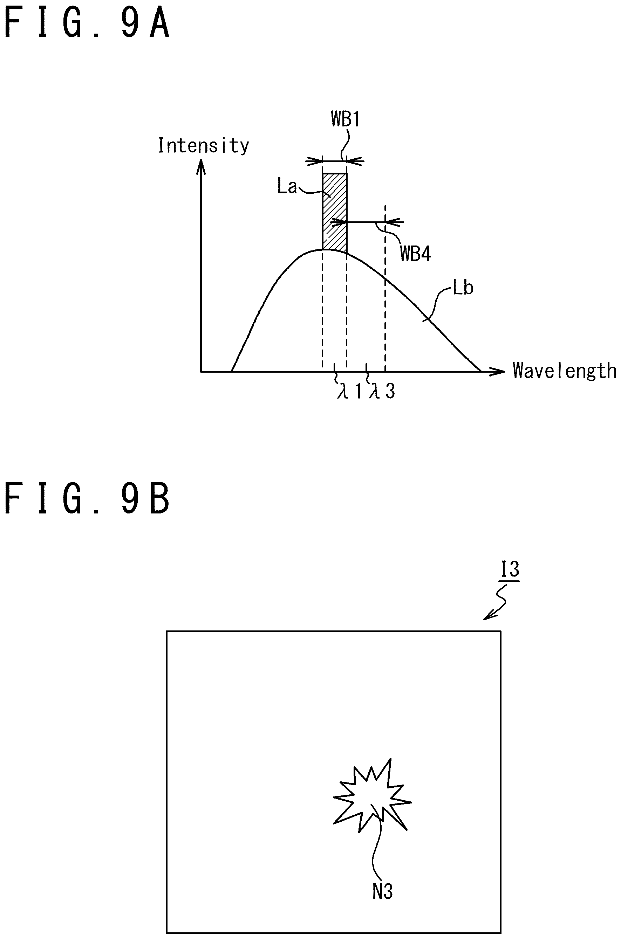

When the step S2006 ends, the generation section 5112 acquires the third image I3 in addition to the first image I1 and the second image I2 (step S2008). As shown in FIG. 9A, the third image I3 is an image obtained by receiving a component of light having a wavelength range in the fourth band WB4 adjacent to the first band WB 1. It should be noted that the first image I1 and the second image I2 are similar to images with same names in the first embodiment.

In the present embodiment, the third imaging section 310c performs imaging of the third image I3 by use of the third bandpass filter 340c with the fourth band WB4 as the pass band. The fourth band WB4 does not overlap the first band WB1 that is the wavelength range of the search light L1 on the wavelength axis of the wavelength spectrum curve. In addition, the fourth band WB4 is located on the opposite side of the pass band of the second bandpass filter 340b (the third band WB3) across the first band WB 1. The third imaging section 310c performs imaging of the target object OB by use of the third bandpass filter 340c having such optical characteristics. Therefore, the intensity of the search light L1 that forms the third image I3 is smaller than the intensity of the search light L1 that forms the first image I1. On the other hand, as shown in FIG. 9B, the third image I3 contains a noise N3 based on influences of other light arriving from the target object OB (such as disturbance light including blackbody radiation).

In the present embodiment, the center of the first band WB1 (and the second band WB2) will be referred to as wavelength $\lambda 1$, the center of the third band WB3 will be referred to as wavelength $\lambda 2$, and the center of the fourth band WB4 will be referred to as wavelength $\lambda 3$. As an example, when $\delta \lambda$ is a positive real number, the following two equations are established.

$$\lambda 2 = \lambda 1 - \delta \lambda$$

$$\lambda 3 = \lambda 1 + \delta \lambda$$

It should be noted that $\delta \lambda$ is a positive real number. Therefore, on the wavelength axis, the pass band of the second bandpass filter 340b (third band WB3) is located on the side with shorter wavelengths than the first band WB 1 and the second band WB2. On the other hand, the pass band of the fourth bandpass filter (fourth band WB4) exists on the side with longer wavelengths than the first band WB1 and the second band WB2. In other words, the first band WB1 and the second band WB2 are located between the third band WB3 and the fourth band WB4 on the wavelength axis. In the present embodiment, $\delta \lambda$ is the smallest real number such that the third band WB3 and the fourth band WB4 do not overlap with the first band WB1.

When the first to third images are acquired in the step S2008, then the generation section 5112 of the processing section 512 generates the generated image Ig based on the first image I1, the second image I2 and the third image I3 that has been acquired (step S2010). For example, the generation section 5112 generates the generate image Ig by subtracting, from the intensity of each pixel in the subtraction area of the first image I1, the average value of the intensity of each corresponding pixel in the second image I2 and the intensity of each corresponding pixel in the third image I3. It should be noted that, the subtraction process in the step S2010 may include a correcting process of respective correspondence relationship of the pixels of the first image I1, the pixels of the second image I2, and the pixels of the third image I3, as described in the step S1010 of the first embodiment.

The laser radiation system 2 according to the present embodiment reduces the noise N1 of the first image I1 by using an average value of the brightness value of the pixels of the second image I2 of which imaging is performed by use of the second bandpass filter 340b and the brightness value of the pixels of the third image I3 of which imaging is performed by use of the third bandpass filter 340c, on the wavelength axis. On the wavelength axis, the pass band of the first bandpass filter 340a (the second band WB2) is different from the pass band of the second bandpass filter 340b (the third band WB3). Therefore, the noise N1 included in the first image I1 and the noise N2 included in the second image I2 may be different in shape and brightness. For example, there is a case where a spectrum curve of the light Lb monotonically increases as the wavelength increases in a wavelength range including the first band WB1 to the fourth band WB4. In this case, for example, when the third band WB3 is on a side of longer wavelength than the second band WB2 on the wavelength axis, the intensity of the light Lb in the third band WB3 becomes consistently higher than the intensity in the second band WB2. On the other hand, when the third band WB3 is on a side of shorter wavelength than the second band WB2 on the wavelength axis, the intensity of the light Lb in the third band WB3 becomes consistently lower than the intensity in the second band WB2. Therefore, regardless of whether the third band WB3 is located on the longer side or shorter side of the second band WB2, the noise N1 and the noise N2 may not match. By averaging intensity bias of the light Lb in wavelength to reduce the noise N1, the laser radiation system 2 has a high accuracy to reduce the influence by disturbance light on the generated image Ig even in such a case.

Next, the generation section 5112 outputs the generated image Ig that is generated in the step S2010 to the laser control device 60, similarly to the step S1012 of the first embodiment (step S2012). Then, the radiation control section 6110 of the processing section 610 updates the radiation direction of the laser beam L2 based on the generated image Ig that the image generation device 52 transmitted, similarly to the step S1014 of the first embodiment (step S2014).

When the step S2014 ends, the radiation control section 6110 determines whether to end the radiation or not, similarly to the step S1016 of the first embodiment (step S2016). When the radiation control section 6110 determines that the condition to end the radiation is not satisfied (step S2016: NO), the process is repeated from the step S2008. On the other hand, when the condition to end the radiation is determined to be satisfied (step S2016: YES), the radiation control section 6110 ends the second control process.

As described above, the laser radiation system 2 according to the present embodiment generates the generated image Ig with less influence from disturbance light than the first image I1 based on the first image I1 in which an image is formed by light having a wavelength in the second band WB2, the second image I2 in which an image is formed by light having a wavelength in the third band WB3, and the third image I3 in which an image is formed by light having a wavelength in the fourth band WB4. Therefore, the error occurred by the spectrum curve of light arriving to the laser radiation system 2 can be reduced more accurately than by generating the generated image by use of images corresponding to light in two wavelength range s.

(Third embodiment) A laser radiation system 3 according to the present embodiment is different from the laser radiation system 1 of the first embodiment in that the generated image Iga is generated based on a first image I1a of which imaging is performed when the search light L1 is radiated and a second image I2a of which imaging is performed when the search light L1 is not radiated.

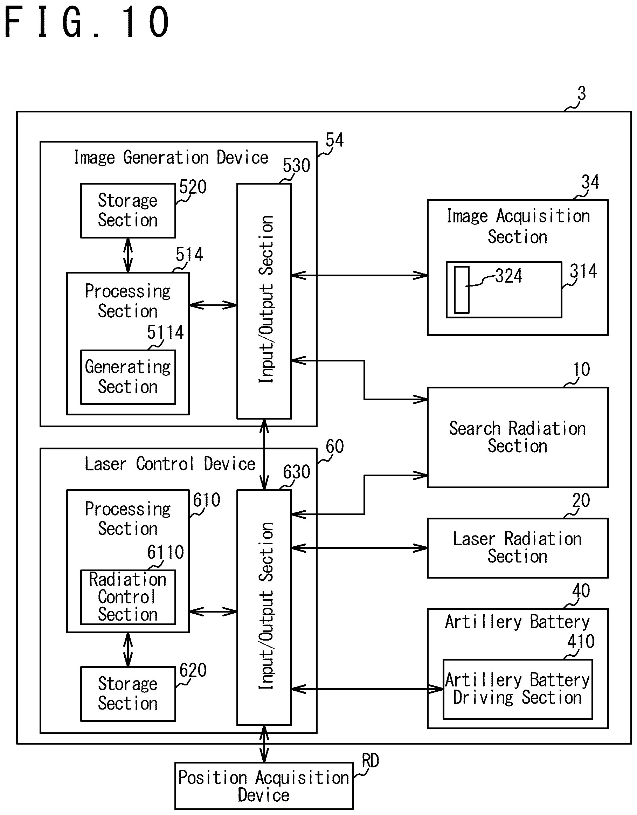

As shown in FIG. 10, the laser radiation system 3 according to the present embodiment has an image acquisition section 34 provided with an imaging section 314. In addition, an image generation device 54 of the laser radiation system 3 is provided with a processing section 514 instead of the processing section 510. The processing section 514 realizes a generation section 5114 by cooperating with the storage section 520 to execute a process described later. The generation section 5114 executes the process described later to control the image acquisition section 34.

For example, the generation section 5114 generates a control command for controlling a focus distance of the image acquisition section 34 and a control command for instructing to perform imaging. The control command for controlling the focus distance includes for example information of a distance from the image acquisition section 34 to the target object OB. The control command for instructing to perform imaging includes for example information indicating a timing to perform imaging, information indicating an amount of aperture, of the like. Then, the generation section 5114 outputs the generated control commands to the image acquisition section 34 by use of the input/output section 530 to make the image acquisition section 34 perform imaging of an image of the target object OB. The generation section 5114 generates the generated image Iga based on the first image I1a of which imaging is performed when the search light L1 is radiated and the second image I2a of which imaging is performed when the search light L1 is not radiated. Other configuration is similar to the laser radiation system 1 of the first embodiment.

Herein, the search radiation section 10 radiates a pulse laser that repeats blinking with a predetermined pulse width as the search light L1. Herein, in the present embodiment, among a period during which the search radiation section 10 is emitting the pulse laser, a period during which the pulse is peaked (energy density of the laser is higher or equal to a predetermined value) will be referred to as lighting period T1, and a period during which the pulse is through (energy density of the laser is lower than the predetermined value) will be referred to as light-off period T2. In the present embodiment, during the lighting period T1, the search radiation section 10 radiates the search light L1 with a first intensity. On the other hand, during the light-off period T2, the search radiation section 10 does not radiate the search light L1. Alternatively, the search radiation section 10 may radiate the search light L1 with a second intensity that is lower than the first intensity during the light-off period T2.

In the present embodiment, the imaging section 314 is provided with an imaging sensor 324. The imaging sensor 324 of the imaging section 314 performs imaging of received light and generates data of the image of which imaging has been performed, based on the control command that the generation section 5114 outputs. The imaging section 314 performs imaging of the target object OB to acquire the first image I1a at a time t1 in the lighting period T 1. In addition, the imaging section 314 performs imaging of the target object OB to acquire the second image I2a at a time t2 in the light-off period T2. The image acquisition section 34 outputs the first image I1a and the second image I2a to the input/output section 530. In the present embodiment, an example in which the imaging section 314 is not provided with any optical filter will be described. However, the imaging section 314 may have a filter similar to the first bandpass filter 340a of the first embodiment or a variable neutral density (ND) filter. It should be noted that the imaging section 314 includes a lens and generates data of image focused at a distance indicated by the control command from the image generation device 50 and the laser control device 60.

The processing section 514 cooperates with the storage section 520 to realize the generation section 5114 that generates the generated image Iga based on the first image I1a and the second image I2a that the input/output section 530 has received.

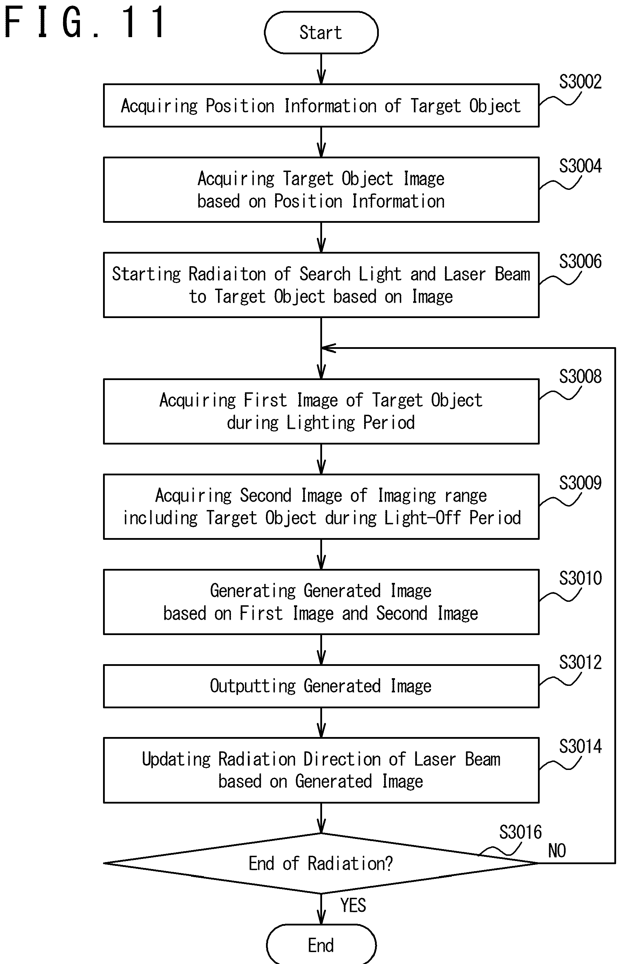

An operation of the laser radiation system 3 will be described with reference to FIG. 11. When the laser radiation system 3 receives information indicating that the target object OB is detected from the position acquisition device RD, the laser radiation system 3 starts a third control process of FIG. 11.

In the third control process, the radiation control section 6110 acquires position information of the target object OB from the position acquisition device RD (step S3002), similarly to the step S1002 of FIG. 3. Next, the generation section 5114 acquires an image of the target object OB based on the acquired position information (step S3004), similarly to the step S1004 of FIG. 3. Then, the radiation control section 6110 starts a radiation of the search light L1 and the laser beam L2 to the target object OB based on the image acquired in the step S3004 (step S3006), similarly to the step S1006 of FIG. 3.

The radiation control section 6110 controls the search radiation section 10 by the control command to perform the radiation of the search light L1 with the first intensity during the lighting period T1 and not to perform the radiation (or to perform the radiation with the second intensity that is lower than the first intensity) during the light-off period T2. In addition, the radiation control section 6110 transmits information indicating the lighting period T1 and information indicating a time when the output of the search light L1 becomes maximal in the lighting period T1, at a time of radiation of the search light L1, to the generation section 5114 of the image generation device 50. When the radiation of the search light L1 stops, for example when the light-off period T2 starts, the radiation control section 6110 transmits information indicating the light-off period T2 and information indicating a time when the output of the search light L1 becomes minimal in the light-off period T2 to the generation section 5114 of the image generation device 50.

When the step S3006 ends, the generation section 5114 acquires the first image I1a of which imaging of the target object OB irradiated with the search light L1 with the first intensity during the lighting period T1 is performed (step S3008). The generation section 5114 makes the imaging section 314 perform imaging of an image of the target object OB when the search radiation section 10 is radiating the search light L1 with the first intensity. To do so, the generation section 5114 calculates a delay time from the search light L1 has been radiated by the search radiation section 10 to be reflected by the target object OB, to the search light L1 reaches the image acquisition section 34. For example, the generation section 5114 calculates the delay time based on the distance to the target object OB indicated by the position information acquired in the step S3002 and the information of light speed stored in the storage section 520. By adding the calculated delay time to the time when the output of the search light L1 becomes maximal that is acquired from the radiation control section 6110, the generation section 5114 calculates a time t1 when the reflected light that is the search light L1 reflected by the target object OB reaches the imaging section 314. The imaging section 314 performs imaging of the target object OB at the calculated time based on the instruction from the generation section 5114. It should be noted that the delay time may be calculated based on table information in which distances to the target object OB and delay time are associated in the storage section 520 in advance. This table information is stored in the storage section 520. In addition, the generation section 5114 may omit the delay time and make the imaging section 314 perform imaging of the target object OB at the time when the output of the search light L1 that is acquired from the radiation control section 6110 becomes maximal.

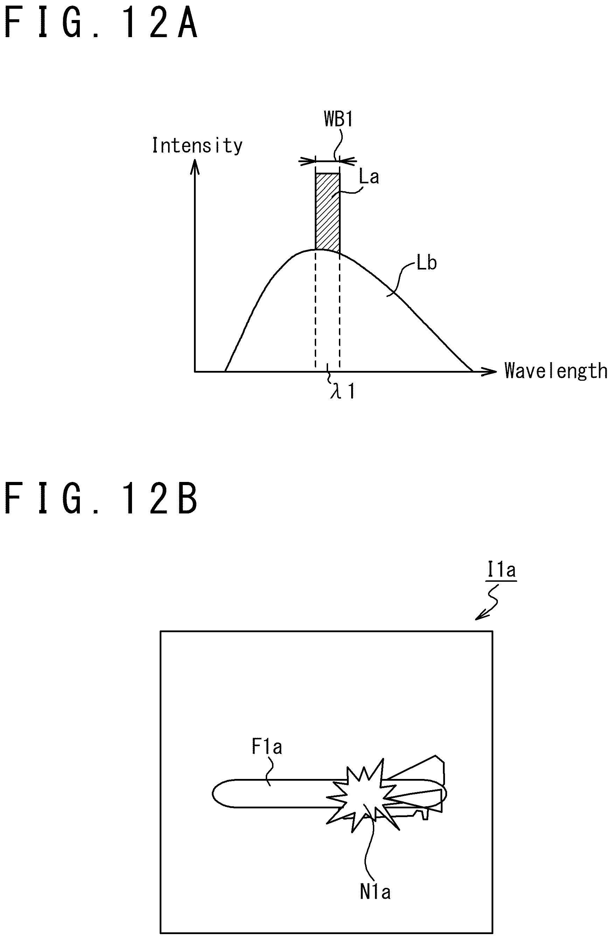

In the present embodiment, the generation section 5114 makes the imaging section 314 perform imaging of the target object OB at the time t1. In this case, at the time 11, the search light L1 of which the output is maximal is reflected by the target object OB and reaches the imaging section 314. Therefore, the light that arrives to the imaging section 314 at the time t1 contains the light La that is the search light L1 reflected by the target object OB and the light Lb that is caused by the disturbance light containing the blackbody radiation, as shown in FIG. 12A. Therefore, the first image I1a contains an image F1a of the target object OB formed by the reflected light that is the search light L1 reflected by the target object OB and a noise N1a occurred by the disturbance light, as shown in FIG. 12B.

When the step S3008 ends, the generation section 5114 acquires a second image I2a of which imaging of an imaging range including the target object OB is performed during the light-off period T2, the target object OB being not irradiated with the search light L1 or irradiated with the search light L1 with the second intensity (step S3009). The generation section 5114 makes the imaging section 314 perform imaging of the second image I2a of which imaging of the imaging range including the target object OB is performed during the period of not being affected by the radiating light during the lighting period T1 (or in which the influence is smaller than in the lighting period T1) for example. Herein, the generation section 5114 makes the imaging section 314 perform imaging of the target object OB at the time t2 which is the time when the intensity of the pulse laser radiated by the search radiation section 10 becomes zero (or becomes minimal) added with the above-described delay time. Alternatively, the generation section 5114 may omit the delay time and make the imaging section 314 perform imaging of the target object OB at the time when the output of the search light L1 acquired from the radiation control section 6110 becomes minimal.

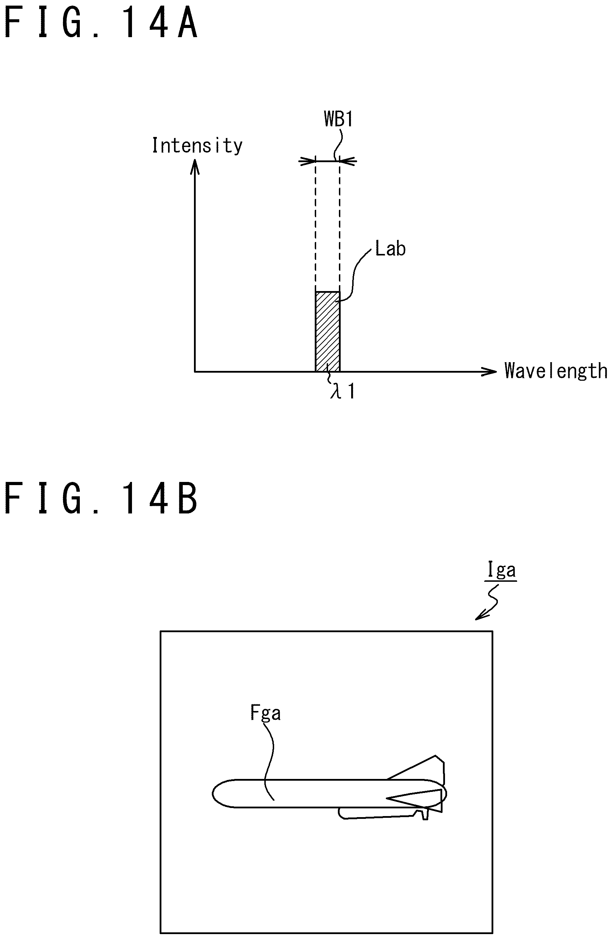

When the step S3009 ends, the generation section 5114 of the processing section 514 generates the generated image Iga based on the first image I1a and the second image I2a (step S3010). As shown in FIG. 14B, this generated image Iga is an image in which the noise N2a occurred by the disturbance light containing the blackbody radiation is reduced from the first image I1a. Specifically, the generation section 5114 generates the generated image Iga by subtracting the brightness value of each pixel of the subtraction area that occupies at least a part of the first image I1a by the brightness value of the corresponding pixel of the second image I2a. In the present embodiment, the subtracting region represents the entire first image. It should be noted that when the intensity of the search light L1 at the time t1 is defined as the first intensity and the intensity of the search light L1 at the time t2 is defined as the second intensity (zero in an example of the present embodiment), the first intensity is higher than the second intensity.

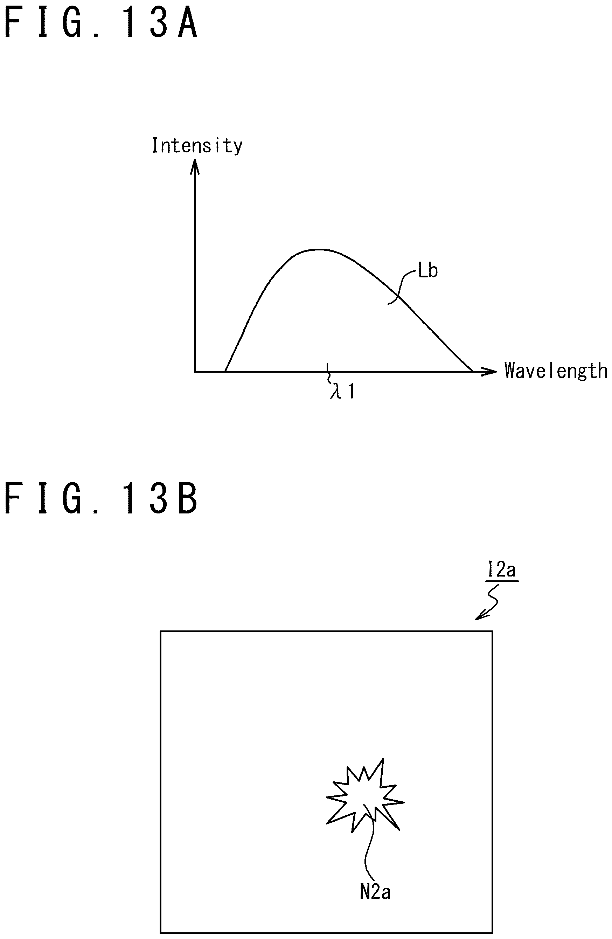

The process in the step S3010 is equivalent to a process of subtracting the intensity of the light containing the light La and the light Lb in FIG. 12A by the intensity of the light Lb in FIG. 13A. Therefore, in order to isolate the noise N1a from the image of the target object OB, an ideal second image I2a contains a noise N2a of which the shape and the brightness value are same as the noise N1a of the first image I1a while does not contain the image of the target object OB with respect to the search light L1. In addition, ideally, the second image I2a and the first image I1a both correspond to a same imaging range including the target object OB. In order to perform imaging of the second image I2a as ideal as possible, the imaging section 314 of the present embodiment performs imaging of the second image I2a at the time t2 that is as close as possible to the time t1 when imaging of the first image I1a has been performed in the lastly executed one of the steps S3008 that may be executed a plurality of times. For example, the light-off period T2 of the step S3009 corresponds to the through of the pulse laser occurred just after the lighting period T1 of the lastly executed step S3008. It should be noted that the step S3009 may be executed in the light-off period T2 immediately after the lighting period T1 of the step S3008.

The second image I2a of which imaging has been performed as above may contain the noise N2a having the shape and the brightness intensity that are almost same as the first image I1, as shown in FIG. 13B. On the other hand, the intensity of the search light L 1 that forms an image in the second image I2 is lower than the intensity of the search light L1 that forms an image in the first image I1.

In the step S3010, the generated image Iga as shown in FIG. 14B is generated. The generated image Iga includes the image Fga of the target object OB corresponding to the image F1a of the target object OB in the first image I1a. This image Fga of the target object OB corresponds to the light Lab having the spectrum curve shown in FIG. 14A for example. The light Lab is almost same as the light La shown in FIG. 12A that is the search light L1 reflected by the target object OB. In other words, as shown in FIG. 14A, in the step S3010, the generation section 5114 generates the generated image Iga including the image Fga corresponding to the light La that is obtained by subtracting the spectrum curve in FIG. 12A by the light Lb due to the blackbody radiation. It should be noted that the subtraction process in the step S3010 may include a correction of correspondence relationship between pixels of the first image I1a and pixels of the second image I2a as described in the step S1010 of the first embodiment.

Next, the generation section 5114 outputs the generated image Iga that has been generated in the step S3010 to the laser control device 60 (step S3012), similarly to the step S1012 of the first embodiment. Then, the radiation control section 6110 of the processing section 610 updates the radiation direction of the laser beam L2 based on the generated image Iga that the image generation device 54 transmitted (step S3014), similarly to the step S1014 of the first embodiment.

When the step S3014 ends, the radiation control section 6110 determines whether to end the radiation or not (step S3016), similarly to the step S1016 of the first embodiment. When the radiation control section 6110 determines that the condition to end the radiation is not satisfied (step S3016: NO), the process is repeated from the step S3008. On the other hand, when the condition to end the radiation is determined to be satisfied (step S3016: YES), the radiation control section 6110 ends the third control process.

As described above, the laser radiation system 3 according to the present embodiment can omit bandpass filters with different wavelength pass bands of the first image I1a and the second image I1b for generating the generated image Iga. Therefore, there is no influence due to difference of noises cause by difference of frequency pass bands of a plurality of bandpass filters in the first image I1a and the second image I2a. Therefore, an accuracy of reducing noise in the generated image Iga is high. In addition, the laser radiation system 3 can be downsized because it is not necessary to perform imaging of the target object OB by use of a plurality of imaging sections.

(Fourth embodiment) In the laser radiation systems according to the first to the third embodiments, the entire first image has been set as the subtraction area that is the target for subtraction process when generating the generated image Ig. The laser radiation system 4 according to the present embodiment is different from the laser radiation systems according to the above-described embodiments in having a configuration that determines a part of the first image I1 including the image of the target object OB as the subtraction area.

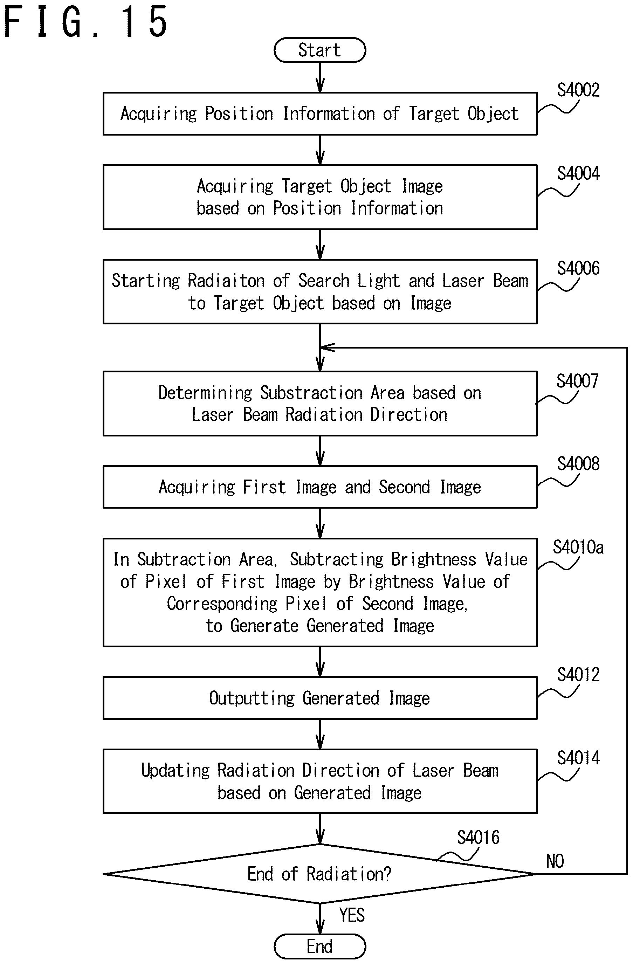

The laser radiation system 4 according to the present embodiment starts a fourth control process in FIG. 15 instead of the first control process in FIG. 3 when information indicating a detection of the target object OB is received from the position acquisition device RD. Other configuration is similar to the laser radiation system 1 according to the first embodiment.

In the fourth control process, the radiation control section 6110 acquires position information of the target object OB from the position acquisition device RD (step S4002), similarly to the step S1002 of FIG. 3. Next, the generation section 5110 acquires an image of the target object OB based on the acquired position information (step S4004), similarly to the step S1004 of FIG. 3. Then, the radiation control section 6110 starts the radiation of the search light L1 and the laser beam L2 based on the image acquired in the step S4004 (step S4006), similarly to the step S1006 of FIG. 3.

Next, in the step S4007, the generation section 5110 determines the subtraction area based on the direction in which the laser radiation section 20 radiates the laser beam L2. For example, when manufacturing the laser radiation system 4, for each distance between the laser radiation system 4 and the target object OB, it is actually measured which pixel region of the first image I1 corresponds to the position where the laser beam L2 that the laser radiation section 20 radiates is focused. Then, a database is generated based on the measured values: in this database, regions of the first image I1 corresponding to irradiation position on the target object OB where the laser beam L2 is radiated are stored in association with each distance to the target object OB. Since this database has information about how much the optical axis of the laser radiation section 20 and the optical axis of the image acquisition section 30 are misaligned, it can be said that the database has information indicating the radiation direction of the laser beam L2. In addition, the storage section 620 stores the database. In the step S4007, the radiation control section 6110 determines the subtraction area based on the radiation direction of the laser beam L2 by searching this database using the distance to the target object OB acquired in the step S4002.

Next, in the step S4008, the generation section 5110 acquires the first image I1 and the second image I2, similarly to the step S1008 of FIG. 3.

Next, in the subtraction area determined in the step S4007, the generation section 5110 of the processing section 510 subtracts the brightness value of a pixel of the first image I1 by the brightness value of a corresponding pixel of the second image I2 to generate the generated image Ig, in the step S4010a. This process is executed similarly to the step S1010 of FIG. 3 except that the process of subtracting brightness values of pixels is limited to the area determined in the step S4007.

Next, the generation section 5110 outputs the generated image Ig that has been generated in the step S4010a to the laser control device 60 (step S4012), similarly to the step S1012 of the first embodiment. Then, the radiation control section 6110 of the processing section 610 updates the radiation direction of the laser beam L2 based on the generated image Ig that the image generation device 50 has transmitted (step S4014), similarly to the step S1014 of the first embodiment.

When the step S4014 ends, the radiation control section 6110 determines whether to end the radiation or not (step S4016), similarly to the step S1016 of the first embodiment. When the radiation control section 6110 determines that the condition to end the radiation is not satisfied (step S4016: NO), the process is repeated from the step S4007. On the other hand, when the condition to end the radiation is determined to be satisfied (step S4016: YES), the radiation control section 6110 ends the fourth control process.

The laser radiation system 4 according to the present embodiment can limit the subtraction area that is a subject of subtraction process to an area with a strong influence of noise due to blackbody radiation. Thus, the laser radiation system 4 can rapidly execute the fourth control process. In relation to this, the laser radiation system 4 may execute processes of the step S4007 and the step S4008 in parallel. In this case, the laser radiation system 4 can execute the fourth control process in a shorter time by performing the process of specifying the subtraction area while performing imaging of the first image I1 and the second image I2.

(Fifth embodiment) The laser radiation system 4 according to the above-described fourth embodiment specified the subtraction area that is the subject of the subtraction process based on the radiation direction of the laser beam L2. The laser radiation system 5 according to the present embodiment is different from the laser radiation system 4 according to the above-described embodiment in that the laser radiation system 5 has a configuration that determines the subtraction area based on the first image I1.

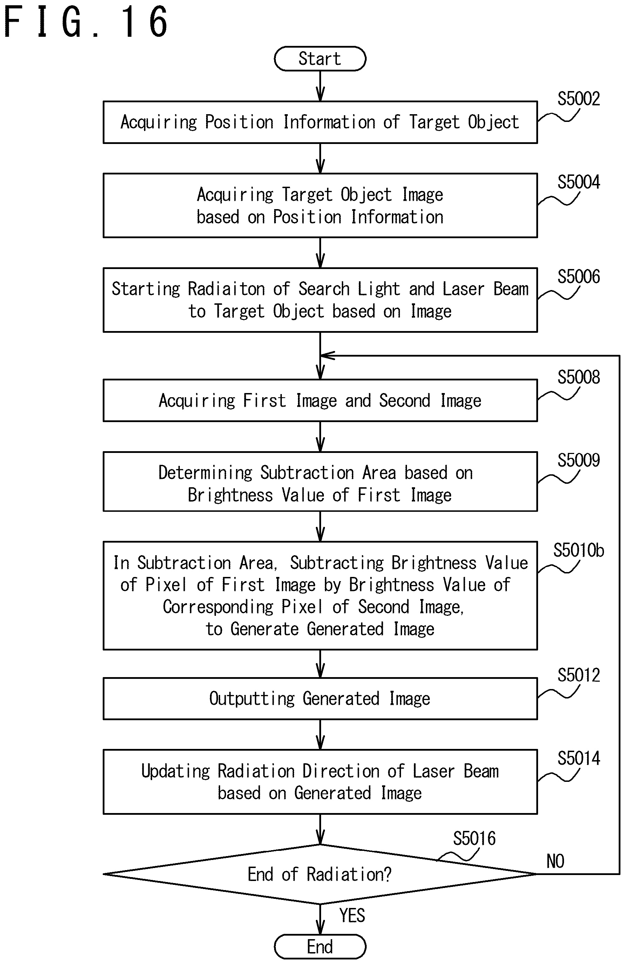

When the laser radiation system 5 according to the present embodiment receives information indicating a detection of the target object OB from the position acquisition device RD, the laser radiation system 5 starts a fifth control process of FIG. 16 instead of the fourth control process of FIG. 15. Other configurations are similar to the laser radiation system 4 according to the fourth embodiment.

In the fifth control process, the radiation control section 6110 acquires position information of the target object OB from the position acquisition device RD (step S5002), similarly to the step S4002 of FIG. 15. Next, the generation section 5110 acquires an image of the target object OB based on the acquired position information (step S5004), similarly to the step S4004 of FIG. 15. Then, the radiation control section 6110 starts radiation of the search light L1 and the laser light L2 based on the image acquired in the step S5004 (step S5006), similarly to the step S4006 of FIG. 15. Next, in the step S5008, the generation section 5110 acquires the first image I1 and the second image I2 (step S5008), similarly to the step S4008 of FIG. 15. It should be noted that the process of the step S4007 of FIG. 15 is omitted in the fifth control process.

When the step S5008 ends, the generation section 5110 determines the subtraction area based on a brightness value of the first image I1 (step S5009). For example, the generation section 5110 extracts a pixel of which the brightness value is the highest among the pixels of the first image I1 and determines a predetermined area with the extracted pixel as the center (for example, 10 pixels by 10 pixels) as the subtraction area. Alternatively, the generation section 5110 may determine all pixels of which the brightness value is higher than a predetermine threshold value in the first image I1 as the subtraction area.

Next, in the subtraction area determined in the step S5009, the generation section 5110 of the processing section 510 subtracts the brightness value of the pixel of the first image I1 by the brightness value of the corresponding pixel of the second image I2, to generate the generated image Ig, in the step S5010b, similarly to the step S4010a of FIG. 15.

Next, the generation section 5110 outputs the generated image Ig that has been generated in the step S5010b to the laser control device 60 (step S5012), similarly to the step S4012 of FIG. 15. Then, the radiation control section 6110 of the processing section 610 updates the radiation direction of the laser beam L2 based on the generated image Ig that the image generation device 50 has transmitted (step S5014), similarly to the step S4014 of FIG. 15.

When the step S5014 ends, the radiation control section 6110 determines whether to end the radiation or not (step S5016), similarly to the step S4016 of FIG. 15. When the radiation control section 6110 determines that the condition to end the radiation is not satisfied (step S5016: NO), the process is repeated from the step S5008. On the other hand, when the condition to end the radiation is determined to be satisfied (step S5016: YES), the radiation control section 6110 ends the fifth control process.

The laser radiation system 5 according to the present embodiment can determine the subtracting area that is a subject of the subtraction process based on the brightness of the first image I1, regardless of information of the radiation direction of the laser beam L2. Therefore, in a case of creating the laser radiation system 5 from a conventional system, there is less change of hardware necessary to speed up the process to generate the generated image Ig.

(Variation examples) In the above-described first to fifth embodiments, examples were shown in which the artillery battery driving section 410 drives the artillery battery 40 to change the radiation direction in which the laser radiation section 20 radiates the laser beam L2. In addition to this or instead of this, the laser radiation section 20 may have another configuration that can change the radiation direction to radiate the laser beam L2. The laser radiation system 1 (or the laser radiation system 2, the laser radiation system 3, the laser radiation system 4, the laser radiation system 5, and similarly in following description of variation example) in the present variation example is further provided with a fine movement mirror that allows the laser radiation section 20 to change the radiation direction of the laser beam L2 and a driving section that changes the angle of the fine movement mirror, for example. Then, the processing section 610 of the laser control device 60 outputs the control command from the input/output section 630 to make the angle of this fine movement mirror change. This control command includes information indicating the angle of the fine movement mirror. The driving section changes the angle of the fine movement mirror based on the concerned control command. As a result, the laser control device 60 changes the radiation direction of the laser beam L2. Herein, compared to the artillery battery driving section 410, the fine movement mirror has a smaller limitation of driving range within which the radiation direction of the laser beam L2 can be changed while can determine the radiation direction more precisely. According to such a configuration, the laser radiation system 1 can precisely change the radiation direction of the laser beam L2.

In the laser radiation system 1 having such a configuration, for example, in the step S1014 of the first control process of FIG. 3, the radiation control section 6110 of the processing section 610 outputs the control command for changing the angle of the fine movement mirror to control the radiation direction of the laser beam L2 so that the laser beam L2 focuses at the radiation part indicated by the generated image Ig that has been generated in the step S1012.

In addition, although in the above-described embodiments, examples were shown in which the image of the target object OB is acquired first and then the search light L1 and the laser beam L2 are radiated, those examples are not limitative: the laser radiation system 1 may radiate the search light L1 before acquiring the image of the target object OB. The image acquisition section 30 (or the image acquisition section 32, or the image acquisition section 34) can receive reflected light from the target object OB by radiating the search light L1, even if it is dark, for example in the night.

In the above-described embodiments and the variation examples thereof, the programs for executing the first to fifth control processes were stored in the storage section 520 and the storage section 620 in advance. However, those programs may be stored in a computer-readable non-transitory recording medium (for example the recording medium M in FIG. 1). In this case, the programs stored in the non-transitory recording medium may be read by the image generation device 50 (or the image generation device 52, or the image generation device 54) or the laser control device 60 to be stored in the storage section 520 and the storage section 620. In addition, the image generation device 50 (or the image generation device 52, or the image generation device 54) or the laser control device 60 may acquire those programs via a communication network such as internet or intranet.

Although in the above-described embodiments examples were shown in which the search radiation section 10, the laser radiation section 20, the image acquisition section 30 (or the image acquisition section 32, or the image acquisition section 34) are fixed to each other, those examples are not limitative. For example, in the laser radiation system 1, if the image acquisition section 30 (or the image acquisition section 32, or the image acquisition section 34) can receive reflected light of the search light L1 radiated from the search radiation section 10 to the target object OB, and if the image generation device 50 (or the image generation device 52, or the image generation device 54) and the laser control device 60 can calculate the position of the target object OB, any alternative configuration may be selected. For example, in the laser radiation system 1, a configuration of the artillery battery 40 may be selected in which the optical axis direction of the search radiation section 10, the optical axis direction of the laser radiation section 20, and the optical axis direction of the image acquisition section 30 (or the image acquisition section 32, or the image acquisition section 34) can be changed independently to each other. In addition, the search radiation section 10, the laser radiation section 20, and the image acquisition section 30 (or the image acquisition section 32, or the image acquisition section 34) may be arranged separately to each other.

In addition, in the above-described embodiments and the variation examples thereof, the laser radiation system 1 was provided with the image generation device 50 (or the image generation device 52, or the image generation device 54) and the laser control device 60, wherein those two devices are physically separated. However, the image generation device 50 (or the image generation device 52, or the image generation device 54) and the laser control device 60 may be integrated to one information processing device. This information processing device is provided with one processing section or more and one storage section or more. In addition, this processing section and this storage section cooperate to perform functions of the generation section 5110 (or the generation section 5112, or the generation section 5114) and the radiation control section 6110 that are described above.

The embodiments and the variation examples as described above are examples and may be changed within a range of not inhibiting the functions. In addition, the configurations described in each of the embodiments and variation examples may be arbitrary changed and/or arbitrarily combined within a range of not inhibiting the functions. For example, a case in which the laser radiation system 1 of the first embodiment is provided with the configuration to specify the subtraction area of the fourth embodiment and the fifth embodiment has been described. However, the laser radiation system 2 of the second embodiment or the laser radiation system 3 of the third embodiment may be provided with a similar configuration to specify the subtraction area. In this case, for example, the step S4007 of FIG. 15 is executed before the step S2008 of FIG. 8.

Furthermore, not only the laser radiation system 1 by also the laser radiation systems 2 to 5 of the second to fifth embodiments may have other configurations that can change the radiation direction of the laser beam L2 (including the fine movement mirror).

For example, in a case of applying another configuration that can change the radiation direction of the laser beam L2 to the laser radiation system 4 of the fourth embodiment, the fourth control process of FIG. 15 may be changed as below. That is, in the step S4007, the processing section 510 acquires information of the radiation direction of the laser beam L2 related to the angle of the fine movement mirror in addition to the radiation direction of the laser beam L2 related to the artillery battery 40 driven by the artillery battery driving section 410. Then, the processing section 510 determines the radiation angle of the laser beam L2 to be radiated from the laser radiation system 4 based on the two pieces of information related to the radiation direction of the laser beam L2, and determines the subtraction area in the first image I1 based on the determined radiation angle, for example by use of triangulation method.

The laser radiation system and the like according to each embodiment are understood for example as below.

A laser radiation system (1, 2, 3, 4, 5) according to a first aspect is provided with a search radiation section (10) that radiates search light (L1) to a target object (OB), a laser radiation section (20) that radiates a laser beam (L2), an image acquisition section (30, 32, 34) that acquires a first image (I1, I1a) in which the target object (OB) is imaged and a second image (I2, I2a) in which an imaging range including the target object (OB) is imaged, a generation section (5110, 5112, 5114) that generates a generated image (Ig, Iga) in which an influence by disturbance light is less than in the first image, based on the first image and the second image, and a radiation control section (6110) that controls a direction in which the laser radiation section radiates the laser beam, based on the generated image; and an intensity of the search light (L1) by which an image is formed in the second image (I2, I2a) is smaller than an intensity of the search light by which an image is formed in the first image.

The laser radiation system according to the first aspect can generate a generated image of which an influence by disturbance light is less than in a first image that is an image obtained by search light. In other words, a disturbance to a target, that is an image by reflected light from the target object irradiated with search light, can be suppressed. In addition, since the direction to radiate the laser beam is controlled based on the generated image, the laser beam can accurately aim.

A laser radiation system according to a second aspect is the laser radiation system according to the first aspect; the search radiation section radiates the search light that is laser light of which a wavelength range is a first band (WB1); the image acquisition section is provided with a first imaging section that performs imaging of the first image in which an image is formed by light having a wavelength in a second band (WB2) that includes the first band and a second imaging section that performs imaging of the second image in which an image is formed by light having a wavelength in a third band (WB3) that does not include the first band; and the generation section generates the generated image based on the first image of which the imaging is performed by the first imaging section and the second image of which the imaging is performed by the second imaging section.

In case of adopting a configuration for performing imaging of an image of the target object by simply using a single bandpass filter, it is necessary to narrow the pass band of the bandpass filter as the noise source becomes stronger in order to ensure a sufficient performance of noise removal. Therefore, when there is a certain noise source or more, the performance of noise removal becomes insufficient. Since the laser radiation system according to the second aspect generates the generated image by use of a plurality of images of which the imaging is performed by use of a plurality of bandpass filters, a generated image with less noise can be generated even if there is a strong noise source.

A laser radiation system according to a third aspect is the laser radiation system according to the first aspect; the search radiation section radiates the search light at a first intensity in a first period and radiates no search light or the search light at a second intensity that is smaller than the first intensity in a second period; and the image acquisition section includes an imaging section that performs imaging of the first image in which the target object that is irradiated with the search light at the first intensity in the first period is imaged and performs imaging of the second image in which an imaging range including the target object that is not irradiated with the search light or is irradiated with the search light at the second intensity in the second period is imaged.

The laser radiation system according to the third aspect does not need to use images of which imaging is performed by using bandpass filters with different pass bands to generate the generated image. Therefore, the laser radiation system of the present aspect can generate a generated image with less influence by errors due to difference of pass bands of the bandpass filters.

A laser radiation system according to a fourth aspect is any one of the laser radiation systems according to the first to the third aspects, and the generation section subtracts, in a subtraction area that occupies at least a part of the first image, a brightness value of a pixel included in the subtraction area by a brightness value of a corresponding pixel of the second image, to generate the generated image.

The laser radiation system according to the fourth aspect can rapidly generate the generated image by subtracting brightness values of pixels.

The laser radiation system according to a fifth aspect is the laser radiation system according to the fourth aspect; and the generation section determines a part of the first image that includes an image of the target object as the subtraction area.

Since the laser radiation system according to the fifth aspect performs subtraction process on a part of the first image that includes an image of the target object, unnecessary operations can be omitted when generating the generated image. In other words, the laser radiation system of the present aspect can rapidly generate the generated image.

A laser radiation system according to a sixth aspect is the laser radiation system according to the fifth aspect; and the generation section determines the subtraction area based on a direction in which the laser radiation section radiates the laser beam.

Since the laser radiation system according to the sixth aspect determines the subtraction area based on the radiation direction of the laser beam, the region to perform subtraction process can be determined with high accuracy in accordance with a situation of the target object.

A laser radiation system according to a seventh aspect is the laser radiation system according to the fifth aspect; and the generation section determines a region of the first image including a pixel of which the brightness is higher than a predetermined criteria as the subtraction area.

Since the laser radiation system according to the seventh aspect determines the subtraction area based on pixel values of pixels included in the first image, the configuration other than the generation section does not need to be changed. In other words, the laser radiation system according to the seventh aspect can be easily implemented.

A laser radiation system according to an eighth aspect is the laser radiation system according to the second aspect; the image acquisition section is further provided with a third imaging section (310c) that performs imaging of a third image (I3) in which light having a wavelength in a fourth band (WB4) forms an image; the first band is between the third band and the fourth band on an axis of light wavelength; and the generation section generates the generated image based on a third image of which imaging is performed by the third imaging section, in addition to the first image and the second image.

The laser radiation system according to the eighth aspect generates the generated image based on the first image, the second image and the third image that correspond to light of different wavelength ranges. Therefore, a generated image with less noise in which variations for each wavelength range of light is averaged can be generated.

A laser radiation system according to a ninth aspect is any one of the laser radiation systems of the first to eighth aspects; and the laser beam is a high-power laser beam of which an intensity is higher than the search light.

The laser radiation system according to the ninth aspect can aim by use of the generated image to irradiate the target object with the high-power laser.

An image generation device (50, 52, 54) according to a tenth aspect is provided with a reception section (530) that receives a first image (I1, I1a) in which a target object (OB) irradiated with search light is imaged and a second image (I2, I2a) in which an imaging range including the target object is imaged, a generation section (5110, 5112, 5114) that generates, based on the first image and the second image, a generated image (Ig, Iga) in which an influence by disturbance light is less than in the first image, and an output section (530) that outputs the generated image; and an intensity of the search light by which an image is formed in the second image is smaller than an intensity of the search light by which an image is formed in the first image.

The image generation device according to the tenth aspect can generate the generated image with less influence by disturbance light than the first image that is an image obtained by the search light. In other words, a disturbance to a target, that is an image by reflected light from the target object irradiated with search light, can be suppressed.

A computer-readable non-transitory recording medium (520, 620, M) according to an eleventh aspect stores a program to make a computer (50, 52, 54, 60) communicably connected to a laser radiation section (20) that radiates a laser beam (L2) execute a process of: acquiring a first image (I1, I1a) in which a target object (OB) irradiated with search light (L1) is imaged and a second image (I2, I2a) in which an imaging range including the target object is imaged; generating a generated image (Ig, Iga) in which an influence by disturbance light is less than in the first image, based on the first image and the second image; and controlling a direction in which the laser radiation section radiates the laser beam, based on the generated image. An intensity of the search light by which an image is formed in the second image is smaller than an intensity of the search light by which an image is formed in the first image.

The computer-readable non-transitory recording medium (520, 620, M) according to the eleventh aspect can make the computer generate the generated image with less influence by disturbance light than the first image that is an image obtained by the search light. In other words, a disturbance to a target, that is an image by reflected light from the target object irradiated with search light, can be suppressed. In addition, since the direction to radiate the laser beam is controlled based on the generated image, the laser beam can accurately aim.

It should be noted that the present application claims priority based on Japanese Patent Application No. 2020-189059, filed on November 13, 2020, all disclosure of which is incorporated herein by reference.

**Claims**

1. A laser radiation system comprising:

   a search radiation section configured to radiate search light to a target object;
   a laser radiation section configured to radiate a laser beam;
   an image acquisition section configured to acquire a first image in which the target object is imaged and a second image in which an imaging range including the target object is imaged;
   a generation section configured to generate a generated image in which an influence by disturbance light is less than in the first image, based on the first image and the second image; and
   a radiation control section configured to control a direction in which the laser radiation section radiates the laser beam, based on the generated image,
   wherein an intensity of the search light by which an image is formed in the second image is smaller than an intensity of the search light by which an image is formed in the first image.

2. The laser radiation system according to claim 1,

   wherein the search radiation section is further configured to radiate the search light that is laser light of which a wavelength range is a first band,
   wherein the image acquisition section comprises:

   a first imaging section configured to perform imaging of the first image in which an image is formed by light having a wavelength in a second band that includes the first band; and
   a second imaging section configured to perform imaging the second image in which an image is formed by light having a wavelength in a third band that does not include the first band,

   wherein the generation section is further configured to generate the generated image based on the first image of which the imaging is performed by the first imaging section and the second image of which the imaging is performed by the second imaging section.

3. The laser radiation system according to claim 1,

   wherein the search radiation section is further configured to:

   radiate, in a first period, the search light at a first intensity; and
   radiate, in a second period, no search light or the search light at a second intensity that is smaller than the first intensity,

   wherein the image acquisition section comprises an imaging section configured to:

   perform imaging of the first image in which the target object that is irradiated with the search light at the first intensity in the first period is imaged; and
   perform imaging of the second image in which the imaging range including the target object that is not irradiated with the search light or is irradiated with the search light at the second intensity in the second period is imaged.

4. The laser radiation system according to any one of claims 1 to 3,
   wherein the generation section is further configured to subtract, in a subtraction area that occupies at least a part of the first image, a brightness value of a pixel included in the subtraction area by a brightness value of a corresponding pixel of the second image, to generate the generated image.

5. The laser radiation system according to claim 4, wherein the generation section is further configured to determine a part of the first image that includes an image of the target object as the subtraction area.

6. The laser radiation system according to claim 5, wherein the generation section is further configured to determine the subtraction area based on a direction in which the laser radiation section radiates the laser beam.

7. The laser radiation system according to claim 5, wherein the generation section is further configured to determine an area that includes a pixel of the first image of which a brightness is higher than a predetermined criteria as the subtraction area.

8. The laser radiation system according to claim 2,

   wherein the image acquisition section further comprises a third imaging section configured to perform imaging of a third image in which light having a wavelength in a fourth band forms an image,
   wherein the first band is between the third band and the fourth band on an axis of light wavelength, and
   wherein the generation section is further configured to generate the generated image based on the third image of which imaging is performed by the third imaging section, in addition to the first image and the second image.

9. The laser radiation system according to any one of claims 1 to 8,
   wherein the laser beam is a high-power laser beam of which an intensity is higher than the search light.

10. An image generation device comprising:

    a reception section configured to receive a first image in which a target object irradiated with search light is imaged and a second image in which an imaging range including the target object is imaged;
    a generation section configured to generate, based on the first image and the second image, a generated image in which an influence by disturbance light is less than in the first image; and
    an output section configured to output the generated image,
    wherein an intensity of the search light by which an image is formed in the second image is smaller than an intensity of the search light by which an image is formed in the first image.

11. A non-transitory and computer-readable recording medium that stores a program to make a computer communicably connected to a laser radiation section configured to radiate laser beam execute a process including:

    acquiring a first image in which a target object irradiated with search light is imaged and a second image in which an imaging range including the target object is imaged;
    generating a generated image in which an influence by disturbance light is less than in the first image, based on the first image and the second image; and
    controlling a direction in which the laser radiation section radiates the laser beam, based on the generated image,

wherein an intensity of the search light by which an image is formed in the second image is smaller than an intensity of the search light by which an image is formed in the first image.

FIG. 1

EP 4 170 277 A1

# FIG. 2

# FIG. 3

```
                    ( Start )
                        |
                        v
  ┌─────────────────────────────────────────────┐   S1002
  │ Acquiring Position Information of Target Object │
  └─────────────────────────────────────────────┘
                        |
                        v
  ┌─────────────────────────────────────────────┐   S1004
  │         Acquiring Target Object Image          │
  │          based on Position Information          │
  └─────────────────────────────────────────────┘
                        |
                        v
  ┌─────────────────────────────────────────────┐   S1006
  │ Starting Radiaiton of Search Light and Laser Beam │
  │          to Target Object based on Image        │
  └─────────────────────────────────────────────┘
                        |
                        v
  ┌─────────────────────────────────────────────┐   S1008
  │        Acquiring First Image and Second Image   │
  └─────────────────────────────────────────────┘
                        |
                        v
  ┌─────────────────────────────────────────────┐   S1010
  │           Generating Generated Image            │
  │       based on First Image and Second Image     │
  └─────────────────────────────────────────────┘
                        |
                        v
  ┌─────────────────────────────────────────────┐   S1012
  │           Outputting Generated Image            │
  └─────────────────────────────────────────────┘
                        |
                        v
  ┌─────────────────────────────────────────────┐   S1014
  │    Updating Radiation Direction of Laser Beam   │
  │           based on Generated Image              │
  └─────────────────────────────────────────────┘
                        |
                        v
                 < End of Radiation? >  S1016  NO
                        |
                        v YES
                    ( End )
```

# FIG. 4A

# FIG. 4B

# FIG. 5A

# FIG. 5B

# FIG. 6A

# FIG. 6B

# FIG. 7

2

Image Acquisition Section 32

Image Generation Device 52

Storage Section 520

Processing Section 512

Generating Section 5112

Input/Output Section 530

320c — 340c — 310c

320b — 340b — 310b

320a — 340a — 310a

Search Radiation Section 10

Laser Control Device 60

Processing Section 610

Radiation Control Section 6110

Storage Section 620

Input/Output Section 630

Laser Radiation Section 20

Artillery Battery 40

Artillery Battery Driving Section 410

Position Acquisition Device RD

# FIG. 8

Start

Acquiring Position Information of Target Object — S2002

Acquiring Target Object Image
based on Position Information — S2004

Starting Radiaiton of Search Light and Laser Beam
to Target Object based on Image — S2006

Acquiring First to Third Images — S2008

Generating Generated Image
based on First to Third Images — S2010

Outputting Generated Image — S2012

Updating Radiation Direction of Laser Beam
based on Generated Image — S2014

End of Radiation? — S2016  NO

YES

End

# FIG. 9A

# FIG. 9B

# FIG. 10

# FIG. 11

```
                              ( Start )
                                  │
                                  ▼
   ┌──────────────────────────────────────────────────┐    S3002
   │  Acquiring Position Information of Target Object   │
   └──────────────────────────────────────────────────┘
                                  │
                                  ▼
   ┌──────────────────────────────────────────────────┐    S3004
   │           Acquiring Target Object Image            │
   │            based on Position Information            │
   └──────────────────────────────────────────────────┘
                                  │
                                  ▼
   ┌──────────────────────────────────────────────────┐    S3006
   │ Starting Radiaiton of Search Light and Laser Beam  │
   │          to Target Object based on Image           │
   └──────────────────────────────────────────────────┘
                                  │
                                  ▼
   ┌──────────────────────────────────────────────────┐    S3008
   │         Acquiring First Image of Target Object     │
   │                during Lighting Period              │
   └──────────────────────────────────────────────────┘
                                  │
                                  ▼
   ┌──────────────────────────────────────────────────┐    S3009
   │       Acquiring Second Image of Imaging range      │
   │   including Target Object during Light-Off Period  │
   └──────────────────────────────────────────────────┘
                                  │
                                  ▼
   ┌──────────────────────────────────────────────────┐    S3010
   │             Generating Generated Image             │
   │         based on First Image and Second Image      │
   └──────────────────────────────────────────────────┘
                                  │
                                  ▼
   ┌──────────────────────────────────────────────────┐    S3012
   │              Outputting Generated Image            │
   └──────────────────────────────────────────────────┘
                                  │
                                  ▼
   ┌──────────────────────────────────────────────────┐    S3014
   │      Updating Radiation Direction of Laser Beam    │
   │               based on Generated Image             │
   └──────────────────────────────────────────────────┘
                                  │
                                  ▼
                            S3016
                      ◇  End of Radiation?  ◇───── NO
                                  │
                                  │ YES
                                  ▼
                              ( End )
```

# FIG.12A

# FIG.12B

# FIG. 13A

Intensity

Lb

λ1

Wavelength

# FIG. 13B

I2a

N2a

# FIG.14A

Intensity

WB1

Lab

λ1

Wavelength

# FIG.14B

Iga

Fga

# FIG. 15

Start

**S4002** Acquiring Position Information of Target Object

**S4004** Acquiring Target Object Image based on Position Information

**S4006** Starting Radiaiton of Search Light and Laser Beam to Target Object based on Image

**S4007** Determining Substraction Area based on Laser Beam Radiation Direction

**S4008** Acquiring First Image and Second Image

**S4010a** In Subtraction Area, Subtracting Brightness Value of Pixel of First Image by Brightness Value of Corresponding Pixel of Second Image, to Generate Generated Image

**S4012** Outputting Generated Image

**S4014** Updating Radiation Direction of Laser Beam based on Generated Image

**S4016** End of Radiation? NO

YES

End

# FIG. 16

```
                    ( Start )
                        │
                        ▼
┌─────────────────────────────────────────────┐
│  Acquiring Position Information of Target Object │ ─── S5002
└─────────────────────────────────────────────┘
                        │
                        ▼
┌─────────────────────────────────────────────┐
│         Acquiring Target Object Image          │ ─── S5004
│          based on Position Information          │
└─────────────────────────────────────────────┘
                        │
                        ▼
┌─────────────────────────────────────────────┐
│  Starting Radiaiton of Search Light and Laser Beam │ ─── S5006
│         to Target Object based on Image          │
└─────────────────────────────────────────────┘
                        │
                        ▼ ◄──────────────────────┐
┌─────────────────────────────────────────────┐ │
│      Acquiring First Image and Second Image     │ ─── S5008
└─────────────────────────────────────────────┘ │
                        │                         │
                        ▼                         │
┌─────────────────────────────────────────────┐ │
│      Determining Subtraction Area based on      │ ─── S5009
│         Brightness Value of First Image         │ │
└─────────────────────────────────────────────┘ │
                        │                         │
                        ▼                         │
┌─────────────────────────────────────────────┐ │
│ In Subtraction Area, Subtracting Brightness Value │ ─ S5010b
│   of Pixel of First Image by Brightness Value of  │ │
│       Corresponding Pixel of Second Image,        │ │
│          to Generate Generated Image            │ │
└─────────────────────────────────────────────┘ │
                        │                         │
                        ▼                         │
┌─────────────────────────────────────────────┐ │
│           Outputting Generated Image            │ ─── S5012
└─────────────────────────────────────────────┘ │
                        │                         │
                        ▼                         │
┌─────────────────────────────────────────────┐ │
│    Updating Radiation Direction of Laser Beam   │ ─── S5014
│           based on Generated Image            │ │
└─────────────────────────────────────────────┘ │
                        │                         │
                        ▼          S5016          │
                    ╱───────────╲    NO            │
                   ╱ End of Radiation? ╲───────────┘
                    ╲───────────╱
                        │ YES
                        ▼
                     ( End )
```

## INTERNATIONAL SEARCH REPORT

| | |
|---|---|
| | International application No. |
| | **PCT/JP2021/040246** |

**A.    CLASSIFICATION OF SUBJECT MATTER**

*F41H 13/00*(2006.01)i; *G06T 7/136*(2017.01)i; *F41H 11/02*(2006.01)i; *G06T 5/50*(2006.01)i
FI:    F41H13/00; G06T5/50; G06T7/136; F41H11/02

According to International Patent Classification (IPC) or to both national classification and IPC

**B.    FIELDS SEARCHED**

Minimum documentation searched (classification system followed by classification symbols)

F41H13/00; G06T7/136; F41H11/02; G06T5/50

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2004-192623 A (NIPPON TELEGR & TELEPH CORP <NTT>) 08 July 2004 (2004-07-08) | 1-11 |
| A | JP 2018-509616 A (BRIGHAM AND WOMEN'S HOSPITAL, INC) 05 April 2018 (2018-04-05) | 1-11 |
| A | JP 2012-5785 A (FUJIFILM CORP) 12 January 2012 (2012-01-12) | 1-11 |
| A | JP 2006-185166 A (MATSUSHITA ELECTRIC WORKS LTD) 13 July 2006 (2006-07-13) | 1-11 |
| A | CN 107977987 A (BEIJING INSTITUTE OF TECHNOLOGY) 01 May 2018 (2018-05-01) | 1-11 |
| A | CN 103646387 A (WEIHAI HUALING OPTO-ELECTRONICS CO., LTD.) 19 March 2014 (2014-03-19) | 1-11 |
| A | JP 2017-20876 A (NIPPON STEEL & SUMITOMO METAL CORP) 26 January 2017 (2017-01-26) | 1-11 |

☐ Further documents are listed in the continuation of Box C.        ☑ See patent family annex.

| | |
|---|---|
| *      Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **30 November 2021** | **14 December 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2021/040246**

| Patent document cited in search report | | | Publication date (day/month/year) | Patent family member(s) | | | Publication date (day/month/year) |
|---|---|---|---|---|---|---|---|
| JP | 2004-192623 | A | 08 July 2004 | WO | 2004/048887 | A1 | |
| JP | 2018-509616 | A | 05 April 2018 | US | 2019/0340736 | A1 | |
| | | | | WO | 2016/138255 | A1 | |
| | | | | CA | 2977974 | A1 | |
| | | | | CN | 108271410 | A | |
| JP | 2012-5785 | A | 12 January 2012 | US | 2011/0319712 | A1 | |
| | | | | EP | 2399508 | A1 | |
| | | | | CN | 102293623 | A | |
| JP | 2006-185166 | A | 13 July 2006 | (Family: none) | | | |
| CN | 107977987 | A | 01 May 2018 | (Family: none) | | | |
| CN | 103646387 | A | 19 March 2014 | (Family: none) | | | |
| JP | 2017-20876 | A | 26 January 2017 | (Family: none) | | | |

Form PCT/ISA/210 (patent family annex) (January 2015)

**REFERENCES CITED IN THE DESCRIPTION**

**Patent documents cited in the description**

- JP 2017020876 A
- JP 2020189059 A